# EUROPEAN PATENT APPLICATION

(11) **EP 4 815 566 A1**
(43) Date of publication of application: **30.09.2026**
(21) Application number: 24906369.4
(22) Date of filing: 17.12.2024
(51) Int. Cl.: H04W 40/02

(54) **COMMUNICATION METHOD AND COMMUNICATION APPARATUS**

(30) Priority: 22.12.2023 CN 202311787291
(71) Applicant: Huawei Technologies Co., Ltd., Shenzhen, Guangdong 518129 (CN)
(72) Inventor: CHENG, Yiping, Shenzhen, Guangdong 518129 (CN); YIN, Yu, Shenzhen, Guangdong 518129 (CN); WANG, Pengfei, Shenzhen, Guangdong 518129 (CN)
(74) Representative: Thun, Clemens
(86) International application number: PCT/CN2024/140102
(87) International publication number: WO 2025/130890

(57) **Abstract**

This application provides a communication method and a communication apparatus applied to the wireless communication field. In the technical solution provided in this application, after receiving first information from a second functional entity, a first functional entity may determine validity of a first routing relationship indicated by the first information, the first routing relationship being a relationship between identification information of the second functional entity and first user identification information, and save the first routing relationship determined to be valid, so that accuracy of the second functional entity determined when the first functional entity performs service discovery based on the user identification information is relatively high.

## Description

This application claims priority to Chinese Patent Application No. 202311787291.9, filed with the China National Intellectual Property Administration on December 22, 2023 and entitled "COMMUNICATION METHOD AND COMMUNICATION APPARATUS", which is incorporated herein by reference in its entirety.

### TECHNICAL FIELD

This application relates to the wireless communication field, and in particular, to a communication method and a communication apparatus.

### BACKGROUND

A service-based architecture (service-based architecture, SBA) of a 5th generation (5th generation, 5G) mobile communication system uses a registration and discovery model. For example, when registering with a network repository function (network repository function, NRF) entity, a network function (network function, NF) entity may report an identity (identity, ID) of a user served by the NF entity. The NRF entity may determine ID routing relationship information based on the user ID reported by the NF entity, so that the NRF entity can perform service discovery based on the user ID, to determine an NF entity that meets service requirements. The ID routing relationship information may be understood as a relationship between the user ID and the NF entity.

However, the registration and discovery manner has the following problem: When performing service discovery based on the user ID, the NRF entity may discover an incorrect NF entity, causing a service failure.

### SUMMARY

This application provides a communication method and a communication apparatus. This application provides a verification mechanism for determining validity of identity (identity, ID) routing relationship information, to improve accuracy when a network repository function (network repository function, NRF) entity performs service discovery based on a user ID.

According to a first aspect, this application provides a communication method. The method is performed by a first functional entity. The method includes: receiving first information from a second functional entity, where the first information indicates a first routing relationship, and the first routing relationship is a relationship between identification information of the second functional entity and first user identification information; and determining validity of the first routing relationship.

For example, the method may be performed by the first functional entity, or may be performed by a chip system, a hardware circuit, and/or a software module that are/is applied to the first functional entity.

For example, the first functional entity may be an ID access gateway, and the second functional entity may be an ID home server directly connected to the first functional entity.

In this technical solution, upon completing configuration and joining a network, the second functional entity may register with the first functional entity and report capabilities and attributes of the second functional entity. For example, the second functional entity may send the first information to the first functional entity, where the first information indicates the first routing relationship, and the first routing relationship is the relationship between the identification information of the second functional entity and the first user identification information.

For example, the identification information of the second functional entity may be a host ID of the second functional entity, and the host ID of the second functional entity may be represented by a common network entity identifier such as a fully qualified domain name (fully qualified domain name, FQDN) of the second functional entity or another domain name. The first routing relationship may be understood as ID routing relationship information, and the first user identification information may be understood as a user ID reported by the second functional entity during registration. The user ID may be represented by a number segment of the user ID, a prefix of the user ID, or a value of the user ID. The number segment of the user ID may also be referred to as a range or number segment range of the user ID. The number segment of the user ID is, for example, 4600310000 to 4600320000. The prefix of the user ID is, for example, 4600 or 46003. The value of the user ID may be any specific value from 4600310000 to 4600320000.

In this technical solution, after receiving the first information sent by the second functional entity, the first functional entity may determine validity of the first routing relationship indicated by the first information, to avoid a problem that an incorrect user ID reported by the second functional entity causes a conflict between user IDs reported by different second functional entities, so that accuracy of the second functional entity found when the first functional entity performs service discovery based on the user ID is relatively high. Determining validity of the first routing relationship may also be referred to as determining legitimacy of the first routing relationship, or verifying/checking/authenticating validity of the first routing relationship. This is not specifically limited herein.

With reference to the first aspect, in some implementations of the first aspect, determining validity of the first routing relationship includes: sending second information to a third functional entity, where the second information is for requesting determination of validity of the first routing relationship; and receiving third information from the third functional entity, where the third information indicates validity of the first routing relationship.

In this implementation, the first functional entity may request the third functional entity to determine validity of the first routing relationship. For example, the third functional entity may be an ID routing authentication service that is directly connected to the first functional entity, or the third functional entity may be an ID routing authentication service that is located in a same routing domain as the first functional entity.

For example, the second information may include the first routing relationship.

For example, the third information may include a result of determining validity of the first routing relationship, and the determining result may be any one of the following: valid, invalid, or unknown. It should be understood that, when the determining result is valid, it may be considered that authentication of the first routing relationship succeeds; when the determining result is invalid, it may be considered that authentication of the first routing relationship fails; or when the determining result is unknown, it may be considered that an authentication function used by the third functional entity to determine validity of the first routing relationship is not enabled.

For example, when the determining result is valid, the first functional entity may save the first routing relationship to a local database; when the determining result is invalid, the first functional entity does not save the first routing relationship; or when the determining result is unknown, the first functional entity may process the first routing relationship based on a local configuration policy. For example, the local configuration policy may be that when the result of determining validity of the first routing relationship is unknown, the first functional entity may save or not save the first routing relationship. If the first routing relationship is saved, it needs to be indicated that the result of determining validity of the saved first routing relationship is unknown. Optionally, the local configuration policy may be preconfigured in the first functional entity in advance.

With reference to the first aspect, in some implementations of the first aspect, when the first routing relationship is valid, the third information further includes a routing validity domain of the first routing relationship.

In this implementation, when it is determined that the first routing relationship is valid, the third information may further include the routing validity domain of the first routing relationship. The routing validity domain of the first routing relationship may be understood as an advertisement range or a transmission range of the first routing relationship in an ID routing network.

Therefore, when the third information indicates that the result of determining validity of the first routing relationship is valid, the first functional entity further needs to determine whether the third information includes the routing validity domain of the first routing relationship. For example, if the third information does not include the routing validity domain of the first routing relationship, the first functional entity may consider that the routing validity domain of the first routing relationship is the entire ID routing network.

In this implementation, the third information carries the routing validity domain of the first routing relationship, so that the first functional entity can determine the advertisement range of the first routing relationship, and the first functional entity can implement a function of hiding or advertising routing information based on the routing validity domain, thereby implementing secure isolation and hiding of the routing information.

With reference to the first aspect, in some implementations of the first aspect, determining validity of the first routing relationship includes: obtaining fourth information, where the fourth information includes information obtained by signing a second routing relationship using a key of a first certificate, the first certificate is a certificate of the second functional entity, and the second routing relationship is a relationship between the identification information of the second functional entity and user identification information belonging to the second functional entity; and determining validity of the first routing relationship based on the fourth information.

In this implementation, the first functional entity may autonomously determine validity of the first routing relationship. For example, the first functional entity may periodically obtain the signed second routing relationship from an ID resource management center, where the signed second routing relationship is obtained by signing the second routing relationship by using the key of the certificate of the second functional entity, and there may be a public key and a private key.

For example, the second routing relationship is a relationship between the identification information of the second functional entity and second user identification information, and the second user identification information may be understood as a user ID resource allocated by the ID resource management center to the second functional entity. For example, the second routing relationship may include one or more key (key) values, and the key value may be represented as <second user identification information, identification information of the second functional entity>. It should be understood that a quantity of key values is consistent with a quantity of second user identification information.

Therefore, the first functional entity may determine validity of the first routing relationship based on the second routing relationship. For example, when a key value that matches the first routing relationship exists in the second routing relationship, it may be considered that the first routing relationship is valid. For example, if the first routing relationship matches a first key value in the second routing relationship, the identification information of the second functional entity in the first routing relationship is consistent with the identification information of the second functional entity in the first key value, and the first user identification information in the first routing relationship is a subset of the second user identification information in the first key value.

In this implementation, the second routing relationship may be signed with a certificate-based signature, so that the first functional entity can determine validity of the first routing relationship based on the signed second routing relationship.

With reference to the first aspect, in some implementations of the first aspect, the fourth information further includes the first certificate, and determining validity of the first routing relationship based on the fourth information includes: determining validity of the first certificate; and when the first certificate is valid, determining validity of the first routing relationship based on the first certificate.

In this implementation, if validity of the first routing relationship is determined based on the second routing relationship, the signed second routing relationship needs to be decrypted. Therefore, the first functional entity further needs to obtain the certificate of the second functional entity from the ID resource management center, and when determining that the certificate of the second functional entity is valid, decrypt the signed second routing relationship by using the key of the certificate of the second functional entity, so as to determine validity of the first routing relationship.

With reference to the first aspect, in some implementations of the first aspect, the fourth information further includes a second certificate, and the second certificate is a certificate of a routing domain to which the second functional entity belongs; and determining validity of the first certificate includes: determining validity of the second certificate; and when the second certificate is valid, determining validity of the first certificate based on the second certificate.

For example, the certificate of the second functional entity may be signed by the second certificate, the second certificate may also be referred to as a trusted domain certificate, and the trusted domain certificate may be a certificate of an ID routing domain to which the second functional entity belongs. Therefore, the first functional entity further needs to obtain the second certificate from the ID resource management center, and decrypt signer information in the certificate of the second functional entity based on a key of the second certificate, to determine validity of the certificate of the second functional entity.

With reference to the first aspect, in some implementations of the first aspect, determining validity of the second certificate includes: determining validity of the second certificate based on a root certificate, where the second certificate is signed using the root certificate.

For example, the second certificate may be signed using the root certificate. Therefore, the first functional entity may decrypt signer information in the second certificate based on a key of the root certificate, to determine validity of the second certificate.

For example, the first functional entity may obtain the root certificate from the ID resource management center.

For example, the root certificate may be preconfigured in the first functional entity.

With reference to the first aspect, in some implementations of the first aspect, the second routing relationship further includes a routing validity domain of the second routing relationship.

For example, the routing validity domain of the second routing relationship may be understood as a route advertisement range of each key value in the second routing relationship.

For example, the routing validity domain may be represented by a common network domain identifier, for example, in an FQDN format.

For example, the routing validity domain of the first routing relationship may be determined based on the routing validity domain of the second routing relationship. For example, when a first key value in the first routing relationship matches the first key value in the second routing relationship, the routing validity domain of the first routing relationship is consistent with a routing validity domain of the first key value.

With reference to the first aspect, in some implementations of the first aspect, when the first routing relationship is valid, the method further includes: sending fifth information to a fourth functional entity, where the fifth information includes the first user identification information and identification information of the first functional entity.

For example, the fourth functional entity may be understood as an ID router or an ID access gateway that is directly connected to the first functional entity.

In this implementation, when it is determined that the first routing relationship is valid, the first functional entity may further send the fifth information to the fourth functional entity, where the fifth information may include the first user identification information and the identification information of the first functional entity. It should be understood that the first user identification information included in the fifth information is the first user identification information included in the determined valid first routing relationship.

With reference to the first aspect, in some implementations of the first aspect, sending the fifth information to the fourth functional entity includes: when the routing validity domain of the first routing relationship is larger than a service domain of the first functional entity, sending the fifth information to the fourth functional entity.

In this implementation, when it is determined that the first routing relationship is valid, the first functional entity may determine, based on the routing validity domain of the first routing relationship, whether the fifth information needs to be sent. For example, the first functional entity may determine the routing validity domain of the first routing relationship based on the third information or the routing validity domain of the second routing relationship.

For example, if the routing validity domain of the first routing relationship is not greater than the service domain of the first functional entity, the fifth information does not need to be sent to the fourth functional entity; or if the routing validity domain of the first routing relationship is greater than the service domain of the first functional entity, the first functional entity may send the fifth information to the fourth functional entity. A service domain of the fourth functional entity is smaller than the routing validity domain of the first routing relationship, or a service domain of the fourth functional entity is included in the routing validity domain of the first routing relationship. Optionally, the service domain of the first functional entity or the fourth functional entity may be represented by a common network domain identifier such as an FQDN or a domain name of the first functional entity or the fourth functional entity.

With reference to the first aspect, in some implementations of the first aspect, the fifth information further includes the identification information of the second functional entity and/or the routing validity domain of the first routing relationship.

In this implementation, the fifth information may further include the identification information of the second functional entity, so that the fourth functional entity may determine validity of the first routing relationship included in the fifth information, and when determining that the first routing relationship is invalid, the fourth functional entity may perform, based on the identification information of the second functional entity, device tracing on the second functional entity that reports the invalid first routing relationship.

In this implementation, the fifth information may further include the routing validity domain of the first routing relationship, so that the fourth functional entity may determine, based on the routing validity domain, whether to continue forwarding routing information including the first user identification information, so that the fourth functional entity implements a function of advertising or hiding the routing information, thereby implementing secure isolation and hiding of the routing information.

According to a second aspect, this application provides a communication method. The method is performed by a second functional entity. The method includes: determining first information, where the first information indicates a first routing relationship, and the first routing relationship is a relationship between identification information of the second functional entity and first user identification information; and sending the first information to a first functional entity.

For example, the method may be performed by the second functional entity, or may be performed by a chip system, a hardware circuit, and/or a software module that are/is applied to the second functional entity.

For example, the second functional entity may be an ID home server, and the first functional entity may be an ID access gateway directly connected to the second functional entity.

In this technical solution, upon completing configuration and join a network, the second functional entity may register with the first functional entity and report capabilities and attributes of the second functional entity. For example, the second functional entity may send the first information to the first functional entity, where the first information indicates the first routing relationship, and the first routing relationship is the relationship between the identification information of the second functional entity and the first user identification information.

For example, the identification information of the second functional entity may be a host ID of the second functional entity, and the host ID of the second functional entity may be represented by a common network entity identifier such as an FQDN of the second functional entity or another domain name. The first routing relationship may be understood as ID routing relationship information, and the first user identification information may be understood as a user ID reported by the second functional entity during registration. The user ID may be represented by a number segment of the user ID, a prefix of the user ID, or a value of the user ID. The number segment of the user ID may also be referred to as a range or number segment range of the user ID. The number segment of the user ID is, for example, 4600310000 to 4600320000. The prefix of the user ID is, for example, 4600 or 46003. The value of the user ID may be any specific value from 4600310000 to 4600320000.

According to a third aspect, this application provides a communication method. The method is performed by a third functional entity. The method includes: receiving second information from a first functional entity, where the second information is for requesting determination of validity of a first routing relationship, and the first routing relationship is a relationship between identification information of a second functional entity and first user identification information; and sending third information to the first functional entity, where the third information indicates validity of the first routing relationship.

For example, the method may be performed by the third functional entity, or may be performed by a chip system, a hardware circuit, and/or a software module that are/is applied to the third functional entity.

For example, the third functional entity may be an ID routing authentication service, the first functional entity may be an ID access gateway directly connected to the third functional entity, or the first functional entity may be an ID access gateway located in a same routing domain as the third functional entity, and the second functional entity may be an ID home server directly connected to the first functional entity.

For example, the identification information of the second functional entity may be a host ID of the second functional entity, and the host ID of the second functional entity may be represented by a common network entity identifier such as an FQDN of the second functional entity or another domain name. The first routing relationship may be understood as ID routing relationship information, and the first user identification information may be understood as a user ID reported by the second functional entity to the first functional entity during registration. The user ID may be represented by a number segment of the user ID, a prefix of the user ID, or a value of the user ID. The number segment of the user ID may also be referred to as a range or number segment range of the user ID. The number segment of the user ID is, for example, 4600310000 to 4600320000. The prefix of the user ID is, for example, 4600 or 46003. The value of the user ID may be any specific value from 4600310000 to 4600320000.

For example, the second information may include the first routing relationship.

For example, the third information may include a result of determining validity of the first routing relationship, and the determining result may be any one of the following: valid, invalid, or unknown. It should be understood that, when the determining result is valid, it may be considered that authentication of the first routing relationship succeeds; when the determining result is invalid, it may be considered that authentication of the first routing relationship fails; or when the determining result is unknown, it may be considered that an authentication function used by the third functional entity to determine validity of the first routing relationship is not enabled.

In this technical solution, upon completing configuration and join a network, the second functional entity may register with the first functional entity and report capabilities and attributes of the second functional entity. For example, the second functional entity may send first information to the first functional entity, where the first information indicates the first routing relationship, and the first routing relationship is the relationship between the identification information of the second functional entity and the first user identification information; and after receiving the first information sent by the second functional entity, the first functional entity may determine validity of the first routing relationship indicated by the first information. Therefore, the first functional entity may send the second information to the third functional entity, to request the third functional entity to determine validity of the first routing relationship. Correspondingly, the third functional entity may receive the second information, and after determining whether the first routing relationship is valid, send the third information to the first functional entity, to indicate validity of the first routing relationship.

With reference to the third aspect, in some implementations of the third aspect, when the first routing relationship is valid, the third information further includes a routing validity domain of the first routing relationship.

In this implementation, when it is determined that the first routing relationship is valid, the third information may further include the routing validity domain of the first routing relationship. The routing validity domain of the first routing relationship may be understood as an advertisement range or a transmission range of the first routing relationship in an ID routing network.

For example, when the result of determining validity of the first routing relationship is valid, but the third information does not include the routing validity domain of the first routing relationship, it may be considered that the routing validity domain of the first routing relationship is the entire ID routing network.

In this implementation, the third information carries the routing validity domain of the first routing relationship, so that the first functional entity can determine the advertisement range of the first routing relationship, and the first functional entity can implement a function of hiding or advertising routing information based on the routing validity domain, thereby implementing secure isolation and hiding of the routing information.

With reference to the third aspect, in some implementations of the third aspect, the method further includes: determining validity of the first routing relationship.

In this implementation, after receiving the second information, the third functional entity may determine validity of the first routing relationship included in the second information.

With reference to the third aspect, in some implementations of the third aspect, determining validity of the first routing relationship includes: obtaining sixth information, where the sixth information includes information obtained by signing a second routing relationship using a key of a first certificate, the first certificate is a certificate of the second functional entity, and the second routing relationship is a relationship between the identification information of the second functional entity and user identification information belonging to the second functional entity; and determining validity of the first routing relationship based on the sixth information.

For example, the third functional entity may periodically obtain the signed second routing relationship from an ID resource management center, where the signed second routing relationship is obtained by signing the second routing relationship by using the key of the certificate of the second functional entity, and there may be a public key and a private key.

For example, the second routing relationship is a relationship between the identification information of the second functional entity and second user identification information, and the second user identification information may be understood as a user ID resource allocated by the ID resource management center to the second functional entity. For example, the second routing relationship may include one or more key (key) values, and the key value may be represented as <second user identification information, identification information of the second functional entity>. It should be understood that a quantity of key values is consistent with a quantity of second user identification information.

Therefore, the third functional entity may determine validity of the first routing relationship based on the second routing relationship. For example, when a key value that matches the first routing relationship exists in the second routing relationship, it may be considered that the first routing relationship is valid. For example, if the first routing relationship matches a first key value in the second routing relationship, the identification information of the second functional entity in the first routing relationship is consistent with the identification information of the second functional entity in the first key value, and the first user identification information in the first routing relationship is a subset of the second user identification information in the first key value.

In this implementation, the second routing relationship may be signed with a certificate-based signature, so that the third functional entity can determine validity of the first routing relationship based on the signed second routing relationship.

With reference to the third aspect, in some implementations of the third aspect, the sixth information further includes the first certificate, and determining validity of the first routing relationship based on the sixth information includes: determining validity of the first certificate; and when the first certificate is valid, determining validity of the first routing relationship based on the first certificate.

In this implementation, if validity of the first routing relationship is determined based on the second routing relationship, the signed second routing relationship needs to be decrypted. Therefore, the third functional entity further needs to obtain the certificate of the second functional entity from the ID resource management center, and when determining that the certificate of the second functional entity is valid, decrypt the signed second routing relationship by using the key of the certificate of the second functional entity, so as to determine validity of the first routing relationship.

With reference to the third aspect, in some implementations of the third aspect, the sixth information further includes a second certificate, and the second certificate is a certificate of a routing domain to which the second functional entity belongs; and determining validity of the first certificate includes: determining validity of the second certificate; and when the second certificate is valid, determining validity of the first certificate based on the second certificate.

For example, the certificate of the second functional entity may be signed by the second certificate, the second certificate may also be referred to as a trusted domain certificate, and the trusted domain certificate may be a certificate of an ID routing domain to which the second functional entity belongs. Therefore, the third functional entity further needs to obtain the second certificate from the ID resource management center, and decrypt signer information in the certificate of the second functional entity based on a key of the second certificate, to determine validity of the certificate of the second functional entity.

With reference to the third aspect, in some implementations of the third aspect, determining validity of the second certificate includes: determining validity of the second certificate based on a root certificate, where the second certificate is signed using the root certificate.

For example, the second certificate may be signed using the root certificate. Therefore, the third functional entity may decrypt signer information in the second certificate based on a key of the root certificate, to determine validity of the second certificate.

For example, the third functional entity may obtain the root certificate from the ID resource management center.

For example, the root certificate may be preconfigured in the third functional entity.

With reference to the third aspect, in some implementations of the third aspect, the second routing relationship further includes a routing validity domain of the second routing relationship.

For example, the routing validity domain of the second routing relationship may be understood as a route advertisement range of each key value in the second routing relationship.

For example, the routing validity domain may be represented by a common network domain identifier, for example, in an FQDN format.

For example, the routing validity domain of the first routing relationship may be determined based on the routing validity domain of the second routing relationship. For example, when a first key value in the first routing relationship matches the first key value in the second routing relationship, the routing validity domain of the first routing relationship is consistent with a routing validity domain of the first key value.

In this implementation, the routing validity domain is carried in the second routing relationship, so that each functional entity (such as the first functional entity and a fourth functional entity) in the ID routing network can determine an advertisement range of routing information, and each functional entity can implement a function of hiding or advertising the routing information based on the routing validity domain, thereby implementing secure isolation and hiding of the routing information.

According to a fourth aspect, this application provides a communication method. The method is performed by a fourth functional entity. The method includes: receiving fifth information from a first functional entity, where the fifth information indicates a first routing relationship, and the first routing relationship is a relationship between identification information of a second functional entity and first user identification information; and determining validity of the first routing relationship.

For example, the method may be performed by the fourth functional entity, or may be performed by a chip system, a hardware circuit, and/or a software module that are/is applied to the fourth functional entity.

For example, the fourth functional entity may be an ID router or an ID access gateway, the first functional entity may be understood as an ID access gateway directly connected to the fourth functional entity, and the second functional entity may be an ID home server directly connected to the first functional entity.

In this technical solution, the first functional entity may determine validity of the first routing relationship after receiving the first routing relationship reported by the second functional entity during registration, and send the fifth information to the fourth functional entity when determining that the first routing relationship is valid.

For example, the identification information of the second functional entity may be a host ID of the second functional entity, and the host ID of the second functional entity may be represented by a common network entity identifier such as an FQDN of the second functional entity or another domain name. The first routing relationship may be understood as ID routing relationship information, and the first user identification information may be understood as a user ID reported by the second functional entity during registration. The user ID may be represented by a number segment of the user ID, a prefix of the user ID, or a value of the user ID. The number segment of the user ID may also be referred to as a range or number segment range of the user ID. The number segment of the user ID is, for example, 4600310000 to 4600320000. The prefix of the user ID is, for example, 4600 or 46003. The value of the user ID may be any specific value from 4600310000 to 4600320000.

For example, that the fifth information indicates the first routing relationship may be understood to mean that the fifth information includes the first routing relationship. It should be understood that the first user identification information included in the fifth information is the first user identification information included in the determined valid first routing relationship.

For example, the fifth information may further include identification information of the first functional entity.

In this technical solution, after receiving the fifth information, the fourth functional entity may determine validity of the first routing relationship included in the fifth information, so as to avoid receiving an invalid first routing relationship from the first functional entity, and ensure relatively high accuracy of the first routing relationship advertised/transmitted in an ID routing network. Determining validity of the first routing relationship may also be referred to as determining legitimacy of the first routing relationship, or verifying/checking/authenticating validity of the first routing relationship. This is not specifically limited herein.

With reference to the fourth aspect, in some implementations of the fourth aspect, the fifth information further includes a routing validity domain of the first routing relationship.

In this implementation, the fifth information may further include the routing validity domain of the first routing relationship, so that the fourth functional entity may determine, based on the routing validity domain, whether to continue forwarding routing information including the first user identification information, so that the fourth functional entity implements a function of advertising or hiding the routing information, thereby implementing secure isolation and hiding of the routing information.

With reference to the fourth aspect, in some implementations of the fourth aspect, determining validity of the first routing relationship includes: sending seventh information to a fifth functional entity, where the seventh information is for requesting determination of validity of the first routing relationship; and receiving eighth information from the fifth functional entity, where the eighth information indicates validity of the first routing relationship.

In this implementation, the fourth functional entity may request the fifth functional entity to determine validity of the first routing relationship. For example, the fifth functional entity may be an ID routing authentication service that is directly connected to the fourth functional entity, or the fifth functional entity may be an ID routing authentication service that is located in a same routing domain as the fourth functional entity.

For example, the seventh information may include the first routing relationship, and the first routing relationship included in the seventh information is valid.

For example, the eighth information may include a result of determining validity of the first routing relationship, and the determining result may be any one of the following: valid, invalid, or unknown. It should be understood that, when the determining result is valid, it may be considered that authentication of the first routing relationship succeeds; when the determining result is invalid, it may be considered that authentication of the first routing relationship fails; or when the determining result is unknown, it may be considered that an authentication function used by the fifth functional entity to determine validity of the first routing relationship is not enabled.

For example, when the determining result is valid, the fourth functional entity may save the first routing relationship to a local database; when the determining result is invalid, the fourth functional entity does not save the first routing relationship; or when the determining result is unknown, the fourth functional entity may process the first routing relationship based on a local configuration policy. For example, the local configuration policy may be that when the result of determining validity of the first routing relationship is unknown, the fourth functional entity may save or not save the first routing relationship. If the first routing relationship is saved, it needs to be indicated that the result of determining validity of the saved first routing relationship is unknown. Optionally, the local configuration policy may be preconfigured in the fourth functional entity in advance.

With reference to the fourth aspect, in some implementations of the fourth aspect, when the first routing relationship is valid, the eighth information further includes the routing validity domain of the first routing relationship.

In this implementation, when it is determined that the first routing relationship is valid, the eighth information may further include the routing validity domain of the first routing relationship. The routing validity domain of the first routing relationship may be understood as an advertisement range or a transmission range of the first routing relationship in the ID routing network.

Therefore, when the eighth information indicates that the result of determining validity of the first routing relationship is valid, the fourth functional entity further needs to determine whether the eighth information includes the routing validity domain of the first routing relationship. For example, if the eighth information does not include the routing validity domain of the first routing relationship, the fourth functional entity may consider that the routing validity domain of the first routing relationship is the entire ID routing network.

In this implementation, the eighth information carries the routing validity domain of the first routing relationship, so that the fourth functional entity can determine the advertisement range of the first routing relationship, and the fourth functional entity can implement a function of hiding or advertising routing information based on the routing validity domain, thereby implementing secure isolation and hiding of the routing information.

With reference to the fourth aspect, in some implementations of the fourth aspect, determining validity of the first routing relationship includes: obtaining ninth information, where the ninth information includes information obtained by signing a second routing relationship using a key of a first certificate, the first certificate is a certificate of the second functional entity, and the second routing relationship is a relationship between the identification information of the second functional entity and user identification information belonging to the second functional entity; and determining validity of the first routing relationship based on the ninth information.

In this implementation, the fourth functional entity may autonomously determine validity of the first routing relationship. For example, the fourth functional entity may periodically obtain the signed second routing relationship from an ID resource management center, where the signed second routing relationship is obtained by signing the second routing relationship by using the key of the certificate of the second functional entity, and there may be a public key and a private key.

For example, the second routing relationship is a relationship between the identification information of the second functional entity and second user identification information, and the second user identification information may be understood as a user ID resource allocated by the ID resource management center to the second functional entity. For example, the second routing relationship may include one or more key (key) values, and the key value may be represented as <second user identification information, identification information of the second functional entity>. It should be understood that a quantity of key values is consistent with a quantity of second user identification information.

Therefore, the fourth functional entity may determine validity of the first routing relationship based on the second routing relationship. For example, when a key value that matches the first routing relationship exists in the second routing relationship, it may be considered that the first routing relationship is valid. For example, if the first routing relationship matches a first key value in the second routing relationship, the identification information of the second functional entity in the first routing relationship is consistent with the identification information of the second functional entity in the first key value, and the first user identification information in the first routing relationship is a subset of the second user identification information in the first key value.

In this implementation, the second routing relationship may be signed with a certificate-based signature, so that the fourth functional entity can determine validity of the first routing relationship based on the signed second routing relationship.

With reference to the fourth aspect, in some implementations of the fourth aspect, the ninth information further includes the first certificate, and determining validity of the first routing relationship based on the ninth information includes: determining validity of the first certificate; and when the first certificate is valid, determining validity of the first routing relationship based on the first certificate.

In this implementation, if validity of the first routing relationship is determined based on the second routing relationship, the signed second routing relationship needs to be decrypted. Therefore, the fourth functional entity further needs to obtain the certificate of the second functional entity from the ID resource management center, and when determining that the certificate of the second functional entity is valid, decrypt the signed second routing relationship by using the key of the certificate of the second functional entity, so as to determine validity of the first routing relationship.

With reference to the fourth aspect, in some implementations of the fourth aspect, the ninth information further includes a second certificate, and the second certificate is a certificate of a routing domain to which the second functional entity belongs; and determining validity of the first certificate includes: determining validity of the second certificate; and when the second certificate is valid, determining validity of the first certificate based on the second certificate.

For example, the certificate of the second functional entity may be signed by the second certificate, the second certificate may also be referred to as a trusted domain certificate, and the trusted domain certificate may be a certificate of an ID routing domain to which the second functional entity belongs. Therefore, the fourth functional entity further needs to obtain the second certificate from the ID resource management center, and decrypt signer information in the certificate of the second functional entity based on a key of the second certificate, to determine validity of the certificate of the second functional entity.

With reference to the fourth aspect, in some implementations of the fourth aspect, determining validity of the second certificate includes: determining validity of the second certificate based on a root certificate, where the second certificate is signed using the root certificate.

For example, the second certificate may be signed using the root certificate. Therefore, the fourth functional entity may decrypt signer information in the second certificate based on a key of the root certificate, to determine validity of the second certificate.

For example, the fourth functional entity may obtain the root certificate from the ID resource management center.

For example, the root certificate may be preconfigured in the fourth functional entity.

With reference to the fourth aspect, in some implementations of the fourth aspect, the second routing relationship further includes a routing validity domain of the second routing relationship.

For example, the routing validity domain of the second routing relationship may be understood as a route advertisement range of each key value in the second routing relationship.

For example, the routing validity domain may be represented by a common network domain identifier, for example, in an FQDN format.

For example, the routing validity domain of the first routing relationship may be determined based on the routing validity domain of the second routing relationship. For example, when a first key value in the first routing relationship matches the first key value in the second routing relationship, the routing validity domain of the first routing relationship is consistent with a routing validity domain of the first key value.

According to a fifth aspect, this application provides a communication method. The method is performed by a fifth functional entity. The method includes: receiving seventh information from a fourth functional entity, where the seventh information is for requesting determination of validity of a first routing relationship, and the first routing relationship is a relationship between identification information of a second functional entity and first user identification information; and sending eighth information to the fourth functional entity, where the eighth information indicates validity of the first routing relationship.

For example, the method may be performed by the fifth functional entity, or may be performed by a chip system, a hardware circuit, and/or a software module that are/is applied to the fifth functional entity.

For example, the fifth functional entity may be an ID routing authentication service, the fourth functional entity may be an ID access gateway directly connected to the fifth functional entity, or the fourth functional entity may be an ID access gateway located in a same routing domain as the fifth functional entity, and the second functional entity may be an ID home server directly connected to the fourth functional entity.

For example, the identification information of the second functional entity may be a host ID of the second functional entity, and the host ID of the second functional entity may be represented by a common network entity identifier such as an FQDN of the second functional entity or another domain name. The first routing relationship may be understood as ID routing relationship information, and the first user identification information may be understood as a user ID reported by the second functional entity to the first functional entity during registration. The user ID may be represented by a number segment of the user ID, a prefix of the user ID, or a value of the user ID. The number segment of the user ID may also be referred to as a range or number segment range of the user ID. The number segment of the user ID is, for example, 4600310000 to 4600320000. The prefix of the user ID is, for example, 4600 or 46003. The value of the user ID may be any specific value from 4600310000 to 4600320000.

For example, the seventh information may include the first routing relationship.

For example, the eighth information may include a result of determining validity of the first routing relationship, and the determining result may be any one of the following: valid, invalid, or unknown. It should be understood that, when the determining result is valid, it may be considered that authentication of the first routing relationship succeeds; when the determining result is invalid, it may be considered that authentication of the first routing relationship fails; or when the determining result is unknown, it may be considered that an authentication function used by the fifth functional entity to determine validity of the first routing relationship is not enabled.

In this technical solution, after receiving fifth information, the fourth functional entity may determine validity of the first routing relationship included in the fifth information. Therefore, the fourth functional entity may send the seventh information to the fifth functional entity, to request the fifth functional entity to determine validity of the first routing relationship. Correspondingly, the fifth functional entity may receive the seventh information, and after determining whether the first routing relationship is valid, send the eighth information to the fourth functional entity, to indicate validity of the first routing relationship.

With reference to the fifth aspect, in some implementations of the fifth aspect, when the first routing relationship is valid, the eighth information further includes a routing validity domain of the first routing relationship.

In this implementation, when it is determined that the first routing relationship is valid, the eighth information may further include the routing validity domain of the first routing relationship. The routing validity domain of the first routing relationship may be understood as an advertisement range or a transmission range of the first routing relationship in an ID routing network.

For example, when the result of determining validity of the first routing relationship is valid, but the eighth information does not include the routing validity domain of the first routing relationship, it may be considered that the routing validity domain of the first routing relationship is the entire ID routing network.

In this implementation, the eighth information carries the routing validity domain of the first routing relationship, so that the fourth functional entity can determine the advertisement range of the first routing relationship, and the fourth functional entity can implement a function of hiding or advertising routing information based on the routing validity domain, thereby implementing secure isolation and hiding of the routing information.

With reference to the fifth aspect, in some implementations of the fifth aspect, the method further includes: determining validity of the first routing relationship.

In this implementation, after receiving the seventh information, the fifth functional entity may determine validity of the first routing relationship included in the seventh information.

With reference to the fifth aspect, in some implementations of the fifth aspect, determining validity of the first routing relationship includes: obtaining tenth information, where the tenth information includes information obtained by signing a second routing relationship using a key of a first certificate, the first certificate is a certificate of the second functional entity, and the second routing relationship is a relationship between the identification information of the second functional entity and user identification information belonging to the second functional entity; and determining validity of the first routing relationship based on the tenth information.

For example, the fifth functional entity may periodically obtain the signed second routing relationship from an ID resource management center, where the signed second routing relationship is obtained by signing the second routing relationship by using the key of the certificate of the second functional entity, and there may be a public key and a private key.

For example, the second routing relationship is a relationship between the identification information of the second functional entity and second user identification information, and the second user identification information may be understood as a user ID resource allocated by the ID resource management center to the second functional entity. For example, the second routing relationship may include one or more key (key) values, and the key value may be represented as <second user identification information, identification information of the second functional entity>. It should be understood that a quantity of key values is consistent with a quantity of second user identification information.

Therefore, the fifth functional entity may determine validity of the first routing relationship based on the second routing relationship. For example, when a key value that matches the first routing relationship exists in the second routing relationship, it may be considered that the first routing relationship is valid. For example, if the first routing relationship matches a first key value in the second routing relationship, the identification information of the second functional entity in the first routing relationship is consistent with the identification information of the second functional entity in the first key value, and the first user identification information in the first routing relationship is a subset of the second user identification information in the first key value.

In this implementation, the second routing relationship may be signed with a certificate-based signature, so that the fifth functional entity can determine validity of the first routing relationship based on the signed second routing relationship.

With reference to the fifth aspect, in some implementations of the fifth aspect, the tenth information further includes the first certificate, and determining validity of the first routing relationship based on the tenth information includes: determining validity of the first certificate; and when the first certificate is valid, determining validity of the first routing relationship based on the first certificate.

In this implementation, if validity of the first routing relationship is determined based on the second routing relationship, the signed second routing relationship needs to be decrypted. Therefore, the fifth functional entity further needs to obtain the certificate of the second functional entity from the ID resource management center, and when determining that the certificate of the second functional entity is valid, decrypt the signed second routing relationship by using the key of the certificate of the second functional entity, so as to determine validity of the first routing relationship.

With reference to the fifth aspect, in some implementations of the fifth aspect, the tenth information further includes a second certificate, and the second certificate is a certificate of a routing domain to which the second functional entity belongs; and determining validity of the first certificate includes: determining validity of the second certificate; and when the second certificate is valid, determining validity of the first certificate based on the second certificate.

For example, the certificate of the second functional entity may be signed by the second certificate, the second certificate may also be referred to as a trusted domain certificate, and the trusted domain certificate may be a certificate of an ID routing domain to which the second functional entity belongs. Therefore, the fifth functional entity further needs to obtain the second certificate from the ID resource management center, and decrypt signer information in the certificate of the second functional entity based on a key of the second certificate, to determine validity of the certificate of the second functional entity.

With reference to the fifth aspect, in some implementations of the fifth aspect, determining validity of the second certificate includes: determining validity of the second certificate based on a root certificate, where the second certificate is signed using the root certificate.

For example, the second certificate may be signed using the root certificate. Therefore, the fifth functional entity may decrypt signer information in the second certificate based on a key of the root certificate, to determine validity of the second certificate.

For example, the fifth functional entity may obtain the root certificate from the ID resource management center.

For example, the root certificate may be preconfigured in the fifth functional entity.

With reference to the fifth aspect, in some implementations of the fifth aspect, the second routing relationship further includes a routing validity domain of the second routing relationship.

For example, the routing validity domain of the second routing relationship may be understood as a route advertisement range of each key value in the second routing relationship.

For example, the routing validity domain may be represented by a common network domain identifier, for example, in an FQDN format.

For example, the routing validity domain of the first routing relationship may be determined based on the routing validity domain of the second routing relationship. For example, when a first key value in the first routing relationship matches the first key value in the second routing relationship, the routing validity domain of the first routing relationship is consistent with a routing validity domain of the first key value.

In this implementation, the routing validity domain is carried in the second routing relationship, so that each functional entity (such as the first functional entity and the fourth functional entity) in the ID routing network can determine an advertisement range of routing information, and each functional entity can implement a function of hiding or advertising the routing information based on the routing validity domain, thereby implementing secure isolation and hiding of the routing information.

According to a sixth aspect, this application provides a communication apparatus. The apparatus includes modules configured to implement the method in the first aspect or any one of the implementations of the first aspect, and each module may be implemented in a form of hardware and/or software.

For example, the apparatus may include a receiving module and a processing module. The receiving module is configured to receive first information from a second functional entity, where the first information indicates a first routing relationship, and the first routing relationship is a relationship between identification information of the second functional entity and first user identification information; and the processing module is configured to determine validity of the first routing relationship.

With reference to the sixth aspect, in some implementations of the sixth aspect, the apparatus may further include a sending module. The sending module is configured to send second information to a third functional entity, where the second information is for requesting determination of validity of the first routing relationship; and the receiving module is further configured to receive third information from the third functional entity, where the third information indicates validity of the first routing relationship.

With reference to the sixth aspect, in some implementations of the sixth aspect, when the first routing relationship is valid, the third information further includes a routing validity domain of the first routing relationship.

With reference to the sixth aspect, in some implementations of the sixth aspect, the processing module is further configured to obtain fourth information, where the fourth information includes information obtained by signing a second routing relationship using a key of a first certificate, the first certificate is a certificate of the second functional entity, and the second routing relationship is a relationship between the identification information of the second functional entity and user identification information belonging to the second functional entity; and the processing module is further configured to determine validity of the first routing relationship based on the fourth information.

With reference to the sixth aspect, in some implementations of the sixth aspect, the fourth information further includes the first certificate; the processing module is further configured to determine validity of the first certificate; and the processing module is further configured to: determine validity of the first routing relationship based on the first certificate when the first certificate is valid.

With reference to the sixth aspect, in some implementations of the sixth aspect, the fourth information further includes a second certificate, and the second certificate is a certificate of a routing domain to which the second functional entity belongs; the processing module is further configured to determine validity of the second certificate; and the processing module is further configured to determine validity of the first certificate based on the second certificate when the second certificate is valid.

With reference to the sixth aspect, in some implementations of the sixth aspect, the processing module is further configured to determine validity of the second certificate based on a root certificate, where the second certificate is signed using the root certificate.

With reference to the sixth aspect, in some implementations of the sixth aspect, the second routing relationship further includes a routing validity domain of the second routing relationship.

With reference to the sixth aspect, in some implementations of the sixth aspect, when the first routing relationship is valid, the sending module is further configured to send fifth information, where the fifth information includes the first user identification information and identification information of the first functional entity.

With reference to the sixth aspect, in some implementations of the sixth aspect, the sending module is further configured to send the fifth information to the fourth functional entity when the routing validity domain of the first routing relationship is larger than a service domain of the first functional entity.

With reference to the sixth aspect, in some implementations of the sixth aspect, the fifth information further includes the identification information of the second functional entity and/or the routing validity domain of the first routing relationship.

According to a seventh aspect, this application provides a communication apparatus. The apparatus includes modules configured to implement the method in the second aspect or any one of the implementations of the second aspect, and each module may be implemented in a form of hardware and/or software.

For example, the apparatus may include a processing module and a sending module. The processing module is configured to determine first information, where the first information indicates a first routing relationship, and the first routing relationship is a relationship between identification information of the second functional entity and first user identification information; and the sending module is configured to send the first information to a first functional entity.

According to an eighth aspect, this application provides a communication apparatus. The apparatus includes modules configured to implement the method in the third aspect or any one of the implementations of the third aspect, and each module may be implemented in a form of hardware and/or software.

For example, the apparatus may include a receiving module and a sending module. The receiving module is configured to receive second information from a first functional entity, where the second information is for requesting determination of validity of a first routing relationship, and the first routing relationship is a relationship between identification information of a second functional entity and first user identification information; and the sending module is configured to send third information to the first functional entity, where the third information indicates validity of the first routing relationship.

With reference to the eighth aspect, in some implementations of the eighth aspect, when the first routing relationship is valid, the third information further includes a routing validity domain of the first routing relationship.

With reference to the eighth aspect, in some implementations of the eighth aspect, the apparatus may further include a processing module. The processing module is configured to determine validity of the first routing relationship.

With reference to the eighth aspect, in some implementations of the eighth aspect, the processing module is further configured to obtain sixth information, where the sixth information includes information obtained by signing a second routing relationship using a key of a first certificate, the first certificate is a certificate of the second functional entity, and the second routing relationship is a relationship between the identification information of the second functional entity and user identification information belonging to the second functional entity; and the processing module is further configured to determine validity of the first routing relationship based on the sixth information.

With reference to the eighth aspect, in some implementations of the eighth aspect, the sixth information further includes the first certificate; the processing module is further configured to determine validity of the first certificate; and the processing module is further configured to determine validity of the first routing relationship based on the first certificate when the first certificate is valid.

With reference to the eighth aspect, in some implementations of the eighth aspect, the sixth information further includes a second certificate, and the second certificate is a certificate of a routing domain to which the second functional entity belongs; the processing module is further configured to determine validity of the second certificate; and the processing module is further configured to determine validity of the first certificate based on the second certificate when the second certificate is valid.

With reference to the eighth aspect, in some implementations of the eighth aspect, the processing module is further configured to determine validity of the second certificate based on a root certificate, where the second certificate is signed using the root certificate.

With reference to the eighth aspect, in some implementations of the eighth aspect, the second routing relationship further includes a routing validity domain of the second routing relationship.

According to a ninth aspect, this application provides a communication apparatus. The apparatus includes modules configured to implement the method in the fourth aspect or any one of the implementations of the fourth aspect, and each module may be implemented in a form of hardware and/or software.

For example, the apparatus may include a receiving module and a processing module. The receiving module is configured to receive fifth information from a first functional entity, where the fifth information indicates a first routing relationship, and the first routing relationship is a relationship between identification information of a second functional entity and first user identification information; and the processing module is configured to determine validity of the first routing relationship.

With reference to the ninth aspect, in some implementations of the ninth aspect, the fifth information further includes a routing validity domain of the first routing relationship. With reference to the ninth aspect, in some implementations of the ninth aspect, the apparatus may further include a sending module. The sending module is configured to send seventh information to a fifth functional entity, where the seventh information is for requesting determination of validity of the first routing relationship; and the receiving module is further configured to receive eighth information from the fifth functional entity, where the eighth information indicates validity of the first routing relationship.

With reference to the ninth aspect, in some implementations of the ninth aspect, when the first routing relationship is valid, the eighth information further includes the routing validity domain of the first routing relationship.

With reference to the ninth aspect, in some implementations of the ninth aspect, the processing module is further configured to obtain ninth information, where the ninth information includes information obtained by signing a second routing relationship using a key of a first certificate, the first certificate is a certificate of the second functional entity, and the second routing relationship is a relationship between the identification information of the second functional entity and user identification information belonging to the second functional entity; and the processing module is further configured to determine validity of the first routing relationship based on the ninth information.

With reference to the ninth aspect, in some implementations of the ninth aspect, the ninth information further includes the first certificate; the processing module is further configured to determine validity of the first certificate; and the processing module is further configured to determine validity of the first routing relationship based on the first certificate when the first certificate is valid.

With reference to the ninth aspect, in some implementations of the ninth aspect, the ninth information further includes a second certificate, and the second certificate is a certificate of a routing domain to which the second functional entity belongs; the processing module is further configured to determine validity of the second certificate; and the processing module is further configured to determine validity of the first certificate based on the second certificate when the second certificate is valid.

With reference to the ninth aspect, in some implementations of the ninth aspect, the processing module is further configured to determine validity of the second certificate based on a root certificate, where the second certificate is signed using the root certificate.

With reference to the ninth aspect, in some implementations of the ninth aspect, the second routing relationship further includes a routing validity domain of the second routing relationship.

According to a tenth aspect, this application provides a communication apparatus. The apparatus includes modules configured to implement the method in the fifth aspect or any one of the implementations of the fifth aspect, and each module may be implemented in a form of hardware and/or software.

For example, the apparatus may include a receiving module and a sending module. The receiving module is configured to receive seventh information from a fourth functional entity, where the seventh information is for requesting determination of validity of a first routing relationship, and the first routing relationship is a relationship between identification information of a second functional entity and first user identification information; and the sending module is configured to send eighth information to the fourth functional entity, where the eighth information indicates validity of the first routing relationship.

With reference to the tenth aspect, in some implementations of the tenth aspect, when the first routing relationship is valid, the eighth information further includes a routing validity domain of the first routing relationship.

With reference to the tenth aspect, in some implementations of the tenth aspect, the apparatus may further include a processing module. The processing module is configured to determine validity of the first routing relationship.

With reference to the tenth aspect, in some implementations of the tenth aspect, the processing module is further configured to obtain tenth information, where the tenth information includes information obtained by signing a second routing relationship using a key of a first certificate, the first certificate is a certificate of the second functional entity, and the second routing relationship is a relationship between the identification information of the second functional entity and user identification information belonging to the second functional entity; and the processing module is further configured to determine validity of the first routing relationship based on the tenth information.

With reference to the tenth aspect, in some implementations of the tenth aspect, the tenth information further includes the first certificate; the processing module is further configured to determine validity of the first certificate; and the processing module is further configured to determine validity of the first routing relationship based on the first certificate when the first certificate is valid.

With reference to the tenth aspect, in some implementations of the tenth aspect, the tenth information further includes a second certificate, and the second certificate is a certificate of a routing domain to which the second functional entity belongs; the processing module is further configured to determine validity of the second certificate; and the processing module is further configured to determine validity of the first certificate based on the second certificate when the second certificate is valid.

With reference to the tenth aspect, in some implementations of the tenth aspect, the processing module is further configured to determine validity of the second certificate based on a root certificate, where the second certificate is signed using the root certificate.

With reference to the tenth aspect, in some implementations of the tenth aspect, the second routing relationship further includes a routing validity domain of the second routing relationship.

According to an eleventh aspect, this application provides a communication apparatus, including a processor. The processor may be coupled to a memory, and is configured to invoke program code in the memory, to perform the method according to the first aspect or any one of the possible implementations of the first aspect. Optionally, the apparatus further includes the memory. Optionally, the apparatus further includes a communication interface, and the processor is coupled to the communication interface.

According to a twelfth aspect, this application provides a communication apparatus, including a processor. The processor may be coupled to a memory, and is configured to invoke program code in the memory, to perform the method according to the second aspect or any one of the possible implementations of the second aspect. Optionally, the apparatus further includes the memory. Optionally, the apparatus further includes a communication interface, and the processor is coupled to the communication interface.

According to a thirteenth aspect, this application provides a communication apparatus, including a processor. The processor may be coupled to a memory, and is configured to invoke program code in the memory, to perform the method according to the third aspect or any one of the possible implementations of the third aspect. Optionally, the apparatus further includes the memory. Optionally, the apparatus further includes a communication interface, and the processor is coupled to the communication interface.

According to a fourteenth aspect, this application provides a communication apparatus, including a processor. The processor may be coupled to a memory, and is configured to invoke program code in the memory, to perform the method according to the fourth aspect or any one of the possible implementations of the fourth aspect. Optionally, the apparatus further includes the memory. Optionally, the apparatus further includes a communication interface, and the processor is coupled to the communication interface.

According to a fifteenth aspect, this application provides a communication apparatus, including a processor. The processor may be coupled to a memory, and is configured to invoke program code in the memory, to perform the method according to the fifth aspect or any one of the possible implementations of the fifth aspect. Optionally, the apparatus further includes the memory. Optionally, the apparatus further includes a communication interface, and the processor is coupled to the communication interface.

According to a sixteenth aspect, this application provides a communication system. The system includes the apparatus in the sixth aspect or the eleventh aspect, includes the apparatus in the seventh aspect or the twelfth aspect, includes the apparatus in the eighth aspect or the thirteenth aspect, includes the apparatus in the ninth aspect or the fourteenth aspect, and includes the apparatus in the tenth aspect or the fifteenth aspect.

According to a seventeenth aspect, this application provides a computer program product including instructions. When the computer program product runs on a computer, the computer is caused to perform the method according to any one of the first aspect, the second aspect, the third aspect, the fourth aspect, the fifth aspect, or the possible implementations thereof.

According to an eighteenth aspect, this application provides a computer-readable storage medium. The computer-readable storage medium stores program code executed by a device, and the program code is used to perform the method according to any one of the first aspect, the second aspect, the third aspect, the fourth aspect, the fifth aspect, or the possible implementations thereof.

For technical effects that may be achieved by any one of the sixth aspect to the eighteenth aspect and any possible design thereof, refer to descriptions of technical effects that may be brought by the first aspect to the fifth aspect. Details are not described herein again.

### BRIEF DESCRIPTION OF DRAWINGS

FIG. 1 is a diagram illustrating an example of a communication system;
FIG. 2 is a diagram illustrating an application scenario according to an embodiment of this application;
FIG. 3 is a diagram illustrating a communication method according to an embodiment of this application;
FIG. 4 is a diagram illustrating a certificate management and signing rule according to an embodiment of this application;
FIG. 5 is a diagram illustrating a communication method according to another embodiment of this application;
FIG. 6 is a diagram illustrating a communication method according to another embodiment of this application;
FIG. 7 is a diagram illustrating a structure of a communication apparatus according to an embodiment of this application; and
FIG. 8 is a diagram illustrating a structure of a communication apparatus according to another embodiment of this application.

### DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent same or similar elements. Implementations described in the following example embodiments do not represent all implementations consistent with this application. On the contrary, the implementations are merely examples of apparatuses and methods that are described in the appended claims in detail and that are consistent with some aspects of this application.

To clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity and an execution sequence, and the terms such as "first" and "second" do not indicate a definite difference.

It should be noted that, in embodiments of this application, the term "example", "for example", or the like indicates an example, an instance, or an illustration. Any embodiment or design scheme described as an "example" or "for example" in this application should not be construed as being more preferred or advantageous than another embodiment or design scheme. To be precise, use of the terms such as "example" or "for example" is intended to present a relative concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or an expression similar to the term indicates any combination of these items, including a single item (piece) or any combination of a plurality of items (pieces). For example, at least one item (piece) of a, b, or c may represent a, b, c, a and b, a and c, b and c, or a and b and c, where a, b, and c may be singular or plural.

The technical solutions provided in this application may be applied to various communication systems, including but not limited to: a Narrowband Internet of Things (Narrowband Internet of Things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a wireless fidelity (wireless fidelity, Wi-Fi) system, a 3rd generation (3rd generation, 3G) mobile communication system, a long term evolution (long term evolution, LTE) system, a long term evolution advanced (LTE-advanced, LTE-A) system, an LTE frequency division duplex (frequency division duplex, FDD) system, an LTE time division duplex (time division duplex, TDD) system, a fourth generation (fourth generation, 4G) mobile communication system, a fifth generation (5th generation, 5G) mobile communication system, three application scenarios of a 5G new radio (new radio, NR) communication system: enhanced mobile broadband (enhanced mobile broadband, eMBB), ultra-reliable and low latency communications (ultra-reliable and low latency communications, URLLC), and massive machine type communication (massive machine type communication, mMTC), and a future 6th generation (6th generation, 6G) mobile communication system, for example, a high frequency, terahertz, or optical communication system. This is not specifically limited in this application.

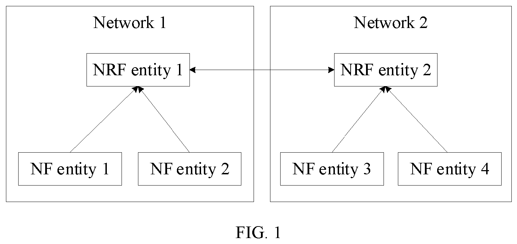

With reference to FIG. 1, the following describes a technical problem to be resolved in this application.

A service-based architecture (service based architecture, SBA) of a 5G mobile communication system uses a registration and discovery model. For example, when a network function (network function, NF) entity accesses a network, the NF entity reports capabilities and attributes of the NF entity to a network repository function (network repository function, NRF) entity, for example, information about a user identity (identity, ID), a tracking area identity (tracking area identity, TAI), and an access point name (access point name, APN) for which the NF entity can provide a service or a service-based interface (service-based interface, SBI), and an SBI interface address. After receiving the information reported by the NF entity, the NRF entity may store the received information according to a specific rule. For example, the NRF entity may internally organize and store ID routing relationship information between the user ID and the NF entity, so that the NRF entity can subsequently perform service discovery based on the user ID, to determine an NF entity that meets a service requirement. For example, in a session activation procedure of a terminal device, a session management function (session management function, SMF) entity may query, by using a subscription permanent identifier (subscription permanent identifier, SUPI) of the terminal device, the NRF entity for a unified data management (unified data management, UDM) entity that serves the SUPI and an SBI interface address provided by the UDM entity. The NRF entity may determine the UDM entity and the SBI interface address of the UDM entity based on the SUPI, and return the foregoing to the SMF entity. The SMF entity may invoke the determined SBI interface provided by the UDM entity, to obtain subscription data of the terminal device. An ID of a user served by the NF entity may be allocated by an operator based on a specific area (such as a province, a city, or a district), that is, the operator may allocate a home NF entity of the user ID.

FIG. 1 is a diagram illustrating an example of a communication system. As shown in FIG. 1, the communication system may include an NRF entity 1, an NRF entity 2, an NF entity 1, an NF entity 2, an NF entity 3, and an NF entity 4. It should be understood that quantities of NF entities and NRF entities are merely examples.

The NRF entity 1, the NF entity 1, and the NF entity 2 are located in a same network, for example, located in a network 1, and the NF entity 1 and the NF entity 2 are located in a management domain of the NRF entity 1. The NF entity 1 or the NF entity 2 may report an ID of a user served by the NF entity 1 or the NF entity 2 to the NRF entity 1 during registration. After receiving the user ID reported by the NF entity 1 or the NF entity 2, the NRF entity 1 may internally organize and store ID routing relationship information between the user ID and the NF entity 1 or the NF entity 2.

The NRF entity 2, the NF entity 3, and the NF entity 4 are located in a same network, for example, located in a network 2, and the NF entity 3 and the NF entity 4 are located in a management domain of the NRF entity 2. The NF entity 3 or the NF entity 4 may report an ID of a user served by the NF entity 3 or the NF entity 4 to the NRF entity 2 during registration. After receiving the user ID reported by the NF entity 3 or the NF entity 4, the NRF entity 2 may internally organize and store ID routing relationship information between the user ID and the NF entity 3 or the NF entity 4.

In the communication system, it is assumed that when the NF entity 4 needs to invoke a service interface provided by another NF entity, the NF entity 4 queries, by using a user ID, the NRF entity 2 for an NF entity that serves the user ID. After receiving the user ID, the NRF entity 2 may determine a management domain of an NRF entity in which a home NF entity of the user ID is located. It is assumed that the home NF entity of the user ID is located in the management domain of the NRF entity 1. In this case, the NRF entity 2 may query, by using the user ID, the NRF entity 1 for an NF entity that serves the user identified by the ID. After receiving the user ID, the NRF entity 1 may determine, from the stored ID routing relationship information and based on the user ID, the NF entity that serves the user identified by the ID and interface information of the NF entity, and return the information to the NRF entity 2, so that the NF entity 4 can invoke a required service interface. It should be noted that IDs of users served by NF entities in management domains of other NRF entities are preconfigured in each NRF entity.

However, the registration and discovery manner has the following problem: When different NF entities independently report IDs of users served by the NF entities, the user IDs reported by the NF entities may be incorrect. Consequently, the user IDs reported by the different NF entities may conflict, and the NRF entity may discover an incorrect NF entity when performing service discovery based on a user ID, causing a service failure.

In view of this, this application provides a communication method and a communication apparatus. This application provides a verification procedure or mechanism for signing ID routing relationship information with a certificate-based signature, to determine validity and legitimacy of the ID routing relationship information. For example, an NRF entity may verify organized and stored ID routing relationship information, or an NRF entity may verify ID routing relationship information received from another NRF entity, so that accuracy of service discovery performed by the NRF entity based on a user ID can be improved. In addition, this application further provides a decision mechanism for determining, by using a routing validity domain of ID routing relationship information, whether the ID routing relationship information needs to be transmitted across networks or across ID routing domains. It should be noted that the communication method and the communication apparatus provided in this application are based on a same technical concept. Because a problem-resolving principle of the method is similar to that of the apparatus, implementations of the method and the apparatus may be cross-referenced, and repeated descriptions are omitted.

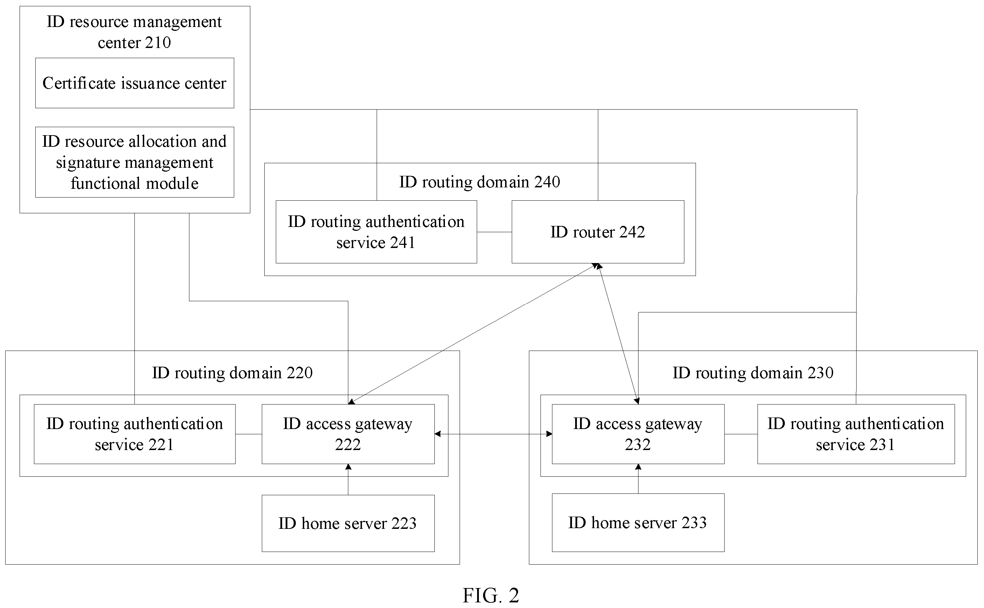

FIG. 2 is a diagram illustrating an application scenario according to an embodiment of this application. The application scenario or a system architecture shown in FIG. 2 may be referred to as an ID routing network architecture or a network architecture that is based on ID routing. The system architecture may be defined based on a 5G core network (5G core, 5GC) SBA architecture and a future network evolution (for example, ID routing network evolution) scenario. As shown in FIG. 2, the system architecture may include an ID resource management center 210, an ID routing domain 220, an ID routing domain 230, and an ID routing domain 240. The ID resource management center 210 mainly includes two functional modules, such as a certificate issuance center and an ID resource allocation and signature management functional module. The ID routing domain 220 may include an ID routing authentication service 221, an ID access gateway 222, and an ID home server 223. The ID routing domain 230 may include an ID routing authentication service 231, an ID access gateway 232, and an ID home server 233. The ID routing domain 240 may include an ID routing authentication service 241 and an ID router 242.

The ID resource management center 210 may be connected to the ID routing authentication service 221, the ID access gateway 222, the ID routing authentication service 231, the ID access gateway 232, the ID routing authentication service 241, and the ID router 242. The ID access gateway 222 may be connected to the ID routing authentication service 221, the ID home server 223, the ID access gateway 232, and the ID router 242 respectively. The ID access gateway 232 may be connected to the ID routing authentication service 231, the ID home server 233, and the ID router 242 respectively. The ID router 242 is connected to the ID routing authentication service 241. In this embodiment of this application, the ID routing authentication service 221, the ID access gateway 222, the ID home server 223, the ID routing authentication service 231, the ID access gateway 232, the ID home server 233, the ID routing authentication service 241, the ID router 242, and the like may be referred to as functional entities, network elements, functional modules, devices, network entities, and the like. This is not specifically limited in this application. It should be understood that quantities of ID routing domains, functional modules, or functional entities in the system architecture are merely examples rather than limitations.

In some embodiments, the ID routing authentication service 221 and the ID access gateway 222 may be combined into one functional entity, and the functional entity implements functions of both the ID routing authentication service 221 and the ID access gateway 222. Similarly, the ID routing authentication service 231 and the ID access gateway 232 may also be combined into one functional entity, and the ID routing authentication service 241 and the ID router 242 may also be combined into one functional entity.

It should be noted that functional modules or functional entities included in the system architecture may be provided by different vendors, or may be provided by a same vendor. This is not specifically limited in this application. It should be understood that names of the ID routing domains, functional modules, or functional entities included in the system architecture are merely examples rather than limitations. Any network element, device, module, or functional entity that has the same function as the ID routing domains, functional modules, or functional entities in the system architecture may fall within the scope of the ID routing domains, functional modules, or functional entities in the system architecture.

For example, the ID resource management center may be a level-1 organization, or may be a multi-level organization. Organizations at different levels perform ID resource management within respective scopes.

The certificate issuance center may be configured to complete hierarchical issuance and signing of certificates. For example, the certificate issuance center may issue a same trusted domain certificate to all ID routing domains in the system architecture, issue a device certificate to each functional entity in the system architecture, and sign the certificate of each functional entity by using the trusted domain certificate. For another example, the certificate issuance center may issue a corresponding trusted domain certificate to each ID routing domain in the system architecture, issue a device certificate to each functional entity in each ID routing domain, and sign the certificate of each functional entity in each ID routing domain by using the trusted domain certificate of each ID routing domain, to implement hierarchical issuance of certificates. Therefore, the functional entities may communicate with each other after mutually determining validity of the certificates, to improve communication security between the functional entities. In this embodiment of this application, if a functional entity A may decrypt a certificate of a functional entity B by using a key of a trusted domain certificate, it may be considered that the certificate of the functional entity B is valid. Determining validity of the certificate may also be referred to as determining/verifying/checking/authenticating legitimacy of the certificate. This is not specifically limited in this application.

The ID resource allocation and signature management functional module may be configured to complete ID resource allocation, for example, allocate a user ID to each ID home server according to a rule; may be further configured to sign and store ID routing relationship information of each ID home server by using a certificate of each ID home server; and may be further configured to provide an interface for each functional entity connected to the ID resource management center. Each functional entity may obtain the signed ID routing relationship information based on the interface, and the ID resource allocation and signature management functional module updates notification information of the signed ID routing relationship information. The signed ID routing relationship information may also be referred to as ID routing relationship information signature data. For example, the ID routing relationship information may be a relationship between the user ID and a host ID of the ID home server.

In some embodiments, the ID resource allocation and signature management functional module may implement ID resource allocation based on a range of the user ID or a prefix of the user ID. The range of the user ID is, for example, 4600310000 to 4600320000. The prefix of the user ID is, for example, 4600 or 46003. The range of the user ID may also be referred to as a number segment of the user ID.

The ID routing authentication service may regularly or periodically obtain, from the ID resource management center, the certificate issued by the certificate issuance center and the ID routing relationship information signature data; and may further determine validity of the obtained certificate, and when it is determined that the certificate of the ID home server is valid, decrypt, based on the certificate of the ID home server, the ID routing relationship information signature data corresponding to the ID home server, to provide the ID access gateway and the ID router with legitimacy authentication of the ID routing relationship information of the ID home server. At least one ID routing authentication service may be deployed in each ID routing domain. It can be learned that one ID routing authentication service is deployed in each ID routing domain in the system architecture shown in FIG. 2.

The ID access gateway may obtain the ID routing relationship information from the ID home server, and complete identity authentication on the ID home server; may further determine validity of the obtained ID routing relationship information by using an ID routing authentication service located in a same ID routing domain as the ID access gateway; and may be further configured to forward the determined valid ID routing relationship information to a directly connected neighboring ID router or ID access gateway. At least one ID access gateway may be deployed in each ID routing domain. It can be learned that one ID access gateway is deployed in each ID routing domain in the system architecture shown in FIG. 2.

In some embodiments, the ID access gateway may also directly obtain, from the ID resource management center, the certificate issued by the certificate issuance center and the ID routing relationship information signature data; and may further determine validity of the obtained certificate, and when it is determined that the certificate of the ID home server is valid, decrypt, based on the certificate of the ID home server, the ID routing relationship information signature data corresponding to the ID home server, to authenticate validity of the obtained ID routing relationship information.

In some embodiments, for example, in a 5GC network architecture, the ID access gateway may be an NRF entity, or a network element function of the ID access gateway may be implemented by an NRF entity.

The ID home server is configured to receive a user ID resource allocated by the ID resource allocation and signature management functional module, and send or advertise the ID routing relationship information to the ID access gateway.

In some embodiments, the ID home server may directly obtain the allocated user ID resource from the ID resource allocation and signature management functional module and store the allocated user ID resource, or after the ID resource allocation and signature management functional module allocates the user ID resource to the ID home server, the allocated user ID resource is manually preconfigured in the ID home server by manual means. This is not specifically limited in this application.

In some embodiments, for example, in the 5GC network architecture, the ID home server may be an NF entity, or a network element function of the ID home server may be implemented by an NF entity.

The ID router may be configured to determine validity of a certificate of an ID access gateway or an ID router directly connected to the ID router, so as to complete identity authentication, and receive ID routing relationship information sent by the ID access gateway or the ID router directly connected to the ID router; may be further configured to determine validity of the received ID routing relationship information by using an ID routing authentication service located in a same routing domain as the ID router; and may be further configured to forward the determined valid ID routing relationship information to a directly connected neighboring ID router or ID access gateway.

In some embodiments, the ID router may also directly obtain, from the ID resource management center, the certificate issued by the certificate issuance center and the ID routing relationship information signature data; and may further determine validity of the obtained certificate, and when it is determined that the certificate of the ID home server is valid, decrypt, based on the certificate of the ID home server, the ID routing relationship information signature data corresponding to the ID home server, to authenticate validity of the received ID routing relationship information.

In some embodiments, for example, in the 5GC network architecture, the ID router may be an NRF entity, or a network element function of the ID router may be implemented by an NRF entity.

In some embodiments, the ID routing relationship information may further include a routing validity domain. The routing validity domain may indicate a route advertisement range of the ID routing relationship information. The route advertisement range is understood as a (valid) advertisement range or a transmission range of the ID routing relationship information in the ID routing network.

In some embodiments, the routing validity domain may be represented by a common network domain identifier, for example, in a fully qualified domain name (fully qualified domain name, FQDN) format. For example, if the routing validity domain of the ID routing relationship information is <E.F>, and a service domain of the ID home server in the ID routing relationship information is <E.F.G.H>, and a service domain of an ID access gateway located in a same ID routing domain as the ID home server is <E.F.G>, the routing validity domain of the ID routing relationship information is greater than the service domain of the ID access gateway. Therefore, the ID access gateway needs to forward the ID routing relationship information to an ID router or an ID access gateway directly connected to the ID access gateway. If a service domain of the ID router directly connected to the ID access gateway is <E.F>, the ID routing relationship information is not transmitted after being transmitted to the ID router. A service domain of a functional entity such as the ID home server, the ID access gateway, or the ID router may be a host ID of each functional entity. The host ID of each functional entity may be represented by a common network entity identifier such as an FQDN or a domain name of each functional entity.

For example, the ID routing relationship information may be represented as <user ID, host ID of the ID home server, routing validity domain (optional)>.

This application provides an autonomous security solution in an ID routing domain. An ID resource management center implements hierarchical issuance of certificates and allocation of user ID resources, and signs and stores ID routing relationship information corresponding to each ID home server in a centralized manner, so that functional entities such as an ID access gateway, an ID routing authentication service, and an ID router can determine, by using a certificate issued by the ID resource management center, validity of ID routing relationship information advertised in an ID routing network.

In some implementations, a security domain of the ID routing network may be classified into a trusted domain and an untrusted domain. For example, the trusted domain may include an ID routing authentication service, an ID access gateway, and an ID router. In the trusted domain, trust of each functional entity may be determined by using a certificate. The untrusted domain may include an ID resource management center and an ID home server. In the untrusted domain, in addition to determining trust of a functional entity by using a certificate, validity of ID routing relationship information advertised in the ID routing network needs to be determined by using a certificate.

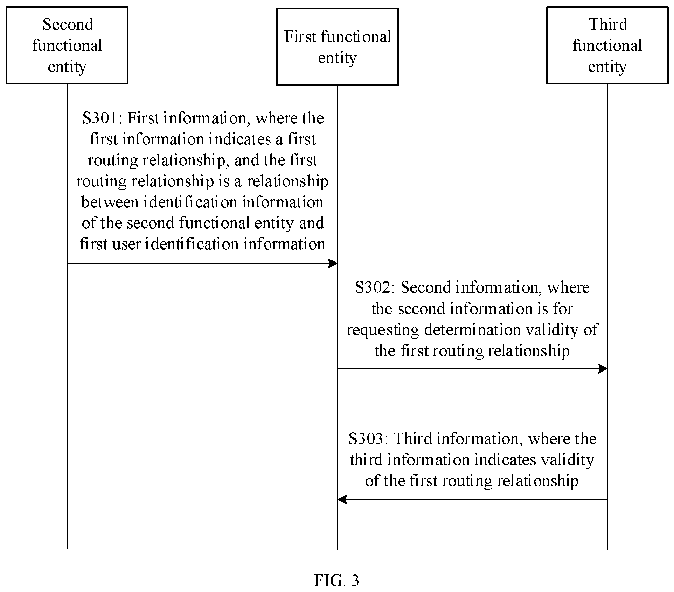

FIG. 3 is a diagram illustrating a communication method according to an embodiment of this application. As shown in FIG. 3, the method may include S301, S302, and S303.

S301: A first functional entity receives first information from a second functional entity, where the first information indicates a first routing relationship, and the first routing relationship is a relationship between identification information of the second functional entity and first user identification information.

In this embodiment of this application, upon completing configuration and join a network, the second functional entity may register with the first functional entity and report capabilities and attributes of the second functional entity. For example, the second functional entity may send the first information to the first functional entity, where the first information indicates the first routing relationship, and the first routing relationship is the relationship between the identification information of the second functional entity and the first user identification information. The first information may also be referred to as a route advertisement message. Sending the first information to the first functional entity by the second functional entity may also be referred to as advertising the route advertisement message to the first functional entity by the second functional entity.

For example, the first functional entity may be an ID access gateway, and the second functional entity may be an ID home server.

For example, the identification information of the second functional entity may be understood as a host ID of the second functional entity, and the host ID of the second functional entity may be represented by a common network entity identifier such as an FQDN of the second functional entity or another domain name. The first routing relationship may be understood as ID routing relationship information, and the first user identification information may be understood as a user ID reported by the second functional entity during registration. The user ID may be represented by a prefix of the user ID, a number segment of the user ID, or a value of the user ID. The number segment of the user ID may also be referred to as a range or number segment range of the user ID.

For example, the first routing relationship may be represented as <first user identification information, identification information of the second functional entity>.

It should be understood that there may be one or more first routing relationships. When there are a plurality of first routing relationships, the first routing relationships may be represented in a form of a list.

S302: The first functional entity sends second information to a third functional entity, where the second information is for requesting determination of validity of the first routing relationship.

In this embodiment of this application, after receiving the first information sent by the second functional entity, the first functional entity needs to determine validity of the first routing relationship indicated by the first information, so that the second functional entity determined when the first functional entity performs service discovery based on the user ID can meet a service requirement.

In a possible implementation, the first functional entity may send the second information to the third functional entity, to request the third functional entity to determine validity of the first routing relationship, where the second information may include the first routing relationship.

For example, when the first functional entity is the ID access gateway, and the second functional entity is the ID home server, the third functional entity may be an ID routing authentication service located in a same ID routing domain as the ID access gateway and the ID home server.

In a possible implementation, after receiving the second information, the third functional entity may match the first routing relationship with a local cache of the third functional entity, to determine validity of the first routing relationship.

For example, the third functional entity may periodically obtain, from an ID resource management center, a certificate issued by a certificate issuance center and signed second routing relationship, decrypt the signed second routing relationship according to a certificate management and signing rule, and save the decrypted second routing relationship, to establish a local cache of the second routing relationship. The second routing relationship may be understood as a relationship between the identification information of the second functional entity and second user identification information belonging to the second functional entity, and the second user identification information may be understood as a user ID resource allocated by an ID resource allocation and signature management functional module to the second functional entity.

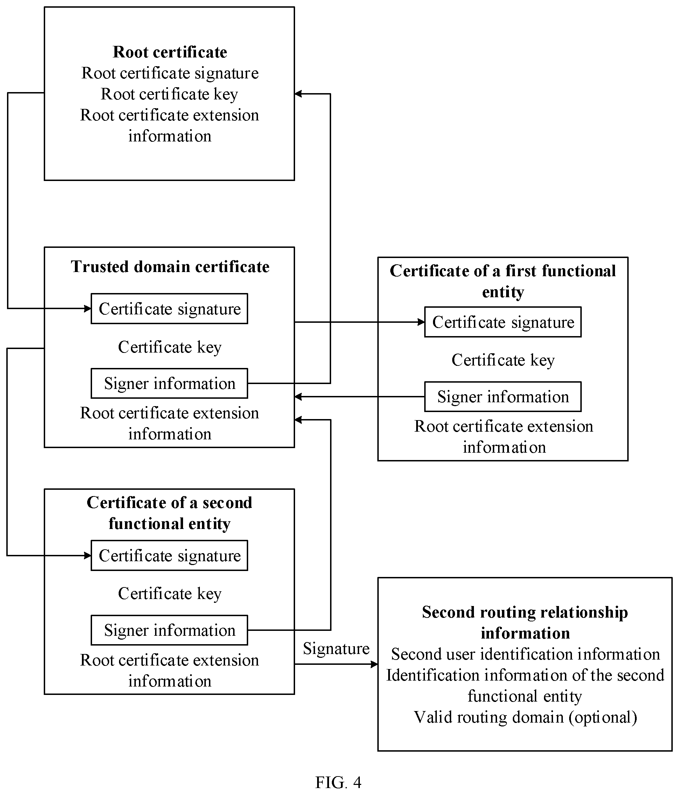

For example, FIG. 4 is a diagram illustrating a certificate management and signing rule according to an embodiment of this application. As shown in FIG. 4, certificates issued by the certificate issuance center may include a root certificate, a trusted domain certificate, a certificate of the first functional entity, and a certificate of the second functional entity. It should be understood that the certificates issued by the certificate issuance center are not limited to the certificates shown in FIG. 4.

As shown in FIG. 4, the root certificate may be understood as a trusted certificate or a self-signed certificate. The root certificate may include a root certificate signature, a root certificate key, and root certificate extension information. There may be a public key and a private key. For example, the root certificate may be a root certificate authority (certificate authority, CA) certificate.

The trusted domain certificate may be a certificate issued by the certificate issuance center of the ID resource management center to the ID routing domain to which the first functional entity and the second functional entity belong. The trusted domain certificate may be the same as or different from a trusted domain certificate of another ID routing domain. This is not specifically limited in this application. The trusted domain certificate may include a certificate signature, a certificate key, signer information, and root certificate extension information. For example, the trusted domain certificate may be a trusted domain CA certificate.

The certificate of the first functional entity may be a certificate issued by the certificate issuance center of the ID resource management center to the first functional entity, and the certificate of the first functional entity may include a certificate signature, a certificate key, signer information, and root certificate extension information. For example, the certificate of the first functional entity may be a CA certificate of the first functional entity.

The certificate of the second functional entity may be a certificate issued by the certificate issuance center of the ID resource management center to the second functional entity, and the certificate of the second functional entity may include a certificate signature, a certificate key, signer information, and root certificate extension information. For example, the certificate of the second functional entity may be a CA certificate of the second functional entity.

In this embodiment, the trusted domain certificate may be signed using the root certificate. Therefore, the signer information in the trusted domain certificate points to the root certificate. For example, that the trusted domain certificate is signed using the root certificate may be understood to mean that the trusted domain certificate is signed by the key of the root certificate. Therefore, the root certificate may be referred to as an upper-level certificate of the trusted domain certificate. Similarly, the certificate of the first functional entity may be signed by the trusted domain certificate. Therefore, the signer information in the certificate of the first functional entity points to the trusted domain certificate. The certificate of the second functional entity may be signed by the trusted domain certificate. Therefore, the signer information in the certificate of the second functional entity points to the trusted domain certificate. Therefore, the trusted domain certificate may be referred to as an upper-level certificate of the certificate of the first functional entity and the certificate of the second functional entity.

After allocating the user ID resource to the second functional entity, the ID resource allocation and signature management functional module may sign the second routing relationship by using the certificate of the second functional entity, and store the signed second routing relationship in a database. It should be noted that an algorithm used for signing is not limited in this application. For example, one or more algorithms such as encryption and decryption and integrity protection may be used as an algorithm used for signing.

In some embodiments, the second routing relationship may further include a routing validity domain of the second routing relationship, and the routing validity domain may indicate a route advertisement range of the second routing relationship.

In some embodiments, the root certificate may be preconfigured in the third functional entity.

Based on the certificate management and signing rule shown in FIG. 4, after periodically obtaining, from the ID resource management center, the certificate issued by the certificate issuance center and the signed second routing relationship, the third functional entity may decrypt the trusted domain certificate by using the key of the root certificate, to determine validity of the trusted domain certificate; if the trusted domain certificate is valid, decrypt the certificate of the second functional entity by using the key of the trusted domain certificate, to determine validity of the certificate of the second functional entity; and if the certificate of the second functional entity is valid, decrypt the signed second routing relationship by using the key of the certificate of the second functional entity, and establish cached data of the second routing relationship, to facilitate subsequent query and authentication.

For example, the second routing relationship may include one or more key (key) values, and the key value may be represented as <second user identification information, identification information of the second functional entity>. It should be understood that a quantity of key values is consistent with a quantity of second user identification information.

Therefore, after receiving the second information, the third functional entity may match the first routing relationship with the second routing relationship stored in the third functional entity, to determine validity of the first routing relationship. For example, when a key value that matches the first routing relationship exists in the second routing relationship, it may be considered that the first routing relationship is valid. For example, if the first routing relationship matches a first key value in the second routing relationship, the identification information of the second functional entity in the first routing relationship is consistent with the identification information of the second functional entity in the first key value, and the first user identification information in the first routing relationship is a subset of the second user identification information in the first key value.

It should be understood that the routing validity domain of the second routing relationship is a route advertisement range of each key value in the second routing relationship.

S303: The first functional entity receives third information from the third functional entity, where the third information indicates validity of the first routing relationship.

In this embodiment, after determining validity of the first routing relationship, the third functional entity may send the third information to the first functional entity, to indicate validity of the first routing relationship.

In a possible implementation, the third information may include a result of determining validity of the first routing relationship, and the determining result may be any one of the following: valid, invalid, or unknown. It should be understood that, when the determining result is valid, it may be considered that authentication of the first routing relationship succeeds; when the determining result is invalid, it may be considered that authentication of the first routing relationship fails; or when the determining result is unknown, it may be considered that an authentication function used by the third functional entity to determine validity of the first routing relationship is not enabled. Optionally, when there are a plurality of first routing relationships, the third functional entity may send a plurality of pieces of third information to the first functional entity, where each piece of third information may include a result of determining validity of each first routing relationship, or the third information may include a result of determining validity of each first routing relationship. This is not limited in this application.

Correspondingly, the first functional entity may receive the third information. If the result of determining validity of the first routing relationship is valid, the first functional entity may save the first routing relationship to a local database; if the result of determining validity of the first routing relationship is invalid, the first functional entity does not save the first routing relationship; or if the result of determining validity of the first routing relationship is unknown, the first functional entity may process the first routing relationship based on a local configuration policy. For example, the local configuration policy may be that when the result of determining validity of the first routing relationship is unknown, the first functional entity may save or not save the first routing relationship. If the first routing relationship is saved, it needs to be indicated that the result of determining validity of the saved first routing relationship is unknown. Optionally, the local configuration policy may be preconfigured in the first functional entity in advance.

In this embodiment, the first functional entity may authenticate, by using the third functional entity, validity of the first routing relationship reported by the second functional entity during registration, and save the determined valid first routing relationship, thereby avoiding a problem that user IDs reported by different second functional entities conflict, so that accuracy of the second functional entity found when the first functional entity performs service discovery based on the user ID is relatively high. In addition, in this embodiment, the first routing relationship is signed, so that validity of the first routing relationship is verified, thereby avoiding tampering with the first routing relationship by a man-in-the-middle, and improving communication efficiency.

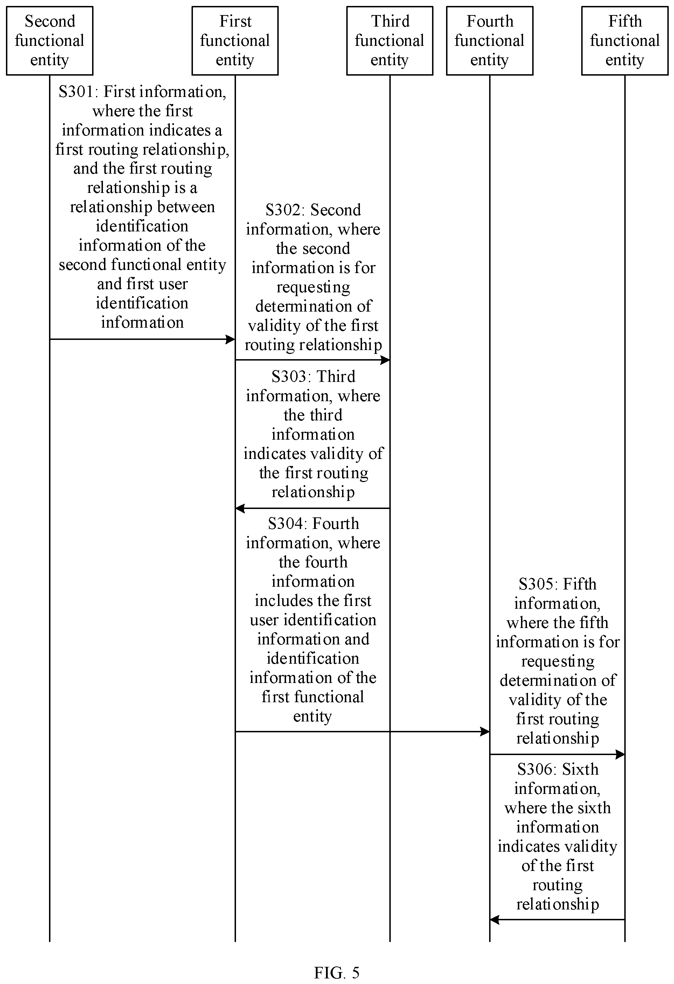

For example, FIG. 5 is a diagram illustrating a communication method according to another embodiment of this application. As shown in FIG. 5, the method may include S301, S302, and S303, and may further include S304, S305, and S306.

S304: The first functional entity sends fourth information to a fourth functional entity, where the fourth information includes the first user identification information and identification information of the first functional entity.

For example, the fourth functional entity may be understood as an ID router or an ID access gateway that is directly connected to the first functional entity.

In some implementations, when the first routing relationship is valid, the third information may further include a routing validity domain of the first routing relationship. The routing validity domain of the first routing relationship may be determined based on the routing validity domain of the second routing relationship. For example, when a first key value in the first routing relationship matches the first key value in the second routing relationship, the routing validity domain of the first routing relationship is consistent with a routing validity domain of the first key value.

Therefore, when the third information indicates that the result of determining validity of the first routing relationship is valid, the first functional entity further needs to determine whether the third information includes the routing validity domain of the first routing relationship. For example, if the third information does not include the routing validity domain of the first routing relationship, the first functional entity may consider that the routing validity domain of the first routing relationship is an entire ID routing network, and the first functional entity may send the fourth information to the fourth functional entity. If the third information includes the routing validity domain of the first routing relationship, and the routing validity domain is larger than a service domain of the first functional entity, the first functional entity may send the fourth information to the fourth functional entity, where a service domain of the fourth functional entity should be smaller than the routing validity domain of the first routing relationship, or a service domain of the fourth functional entity is included in the routing validity domain of the first routing relationship. If the third information includes the routing validity domain of the first routing relationship, and the range of the routing validity domain is not greater than the service domain of the first functional entity, the first functional entity does not send the fourth information to the fourth functional entity.

In this embodiment, the fourth information may also be referred to as route advertisement information, and the fourth information may include the first user identification information and the identification information of the first functional entity. The identification information of the first functional entity may be a host ID of the first functional entity, and the host ID of the first functional entity may be represented by a common network entity identity such as an FQDN or a domain name of the first functional entity.

For example, the fourth information may be represented as <first user identification information, identification information of the first functional entity>. It should be understood that the first user identification information included in the fourth information is the first user identification information in the determined valid first routing relationship.

In some implementations, the first functional entity may send the fourth information in a direct forwarding manner or an aggregated forwarding manner.

For example, if the first user identification information in the determined valid first routing relationship includes 460031000 to 460031500, 460031600 to 460031799, and 460031800, and if the first functional entity sends the fourth information in the direct forwarding manner, the fourth information may include: <460031000 to 460031500, identification information of the first functional entity>, <460031600 to 460031799, identification information of the first functional entity>, and <460031800, identification information of the first functional entity>. If the first functional entity sends the fourth information in the aggregated forwarding manner, the fourth information may include <460031000 to 460031500, identification information of the first functional entity> and <460031600 to 460031800, identification information of the first functional entity>. It should be understood that 460031600 to 460031799 and 460031800 may be aggregated into 460031600 to 460031800.

In this example, when the first functional entity sends the fourth information in the direct forwarding manner, the fourth information may further include the identification information of the second functional entity and/or the routing validity domain of the first routing relationship; or when the first functional entity sends the fourth information in the aggregated forwarding manner, the fourth information may further include the routing validity domain of the first routing relationship.

Correspondingly, the fourth functional entity may receive and save the fourth information. If the fourth information includes only the first user identification information and the identification information of the first functional entity, the fourth functional entity may forward the received first user identification information, and may carry identification information of the fourth functional entity during forwarding. It should be understood that the fourth functional entity may forward the information to another functional entity directly connected to the fourth functional entity. If the fourth information includes the routing validity domain of the first routing relationship, and the routing validity domain of the first routing relationship is greater than the service domain of the fourth functional entity, the fourth functional entity may forward the received first user identification information, and may carry the identification information of the fourth functional entity during forwarding, or may carry the identification information of the fourth functional entity and the routing validity domain of the first routing relationship, where a service domain of a functional entity receiving the information forwarded by the fourth functional entity should be smaller than the routing validity domain of the first routing relationship. If the fourth information includes the identification information of the second functional entity, the fourth functional entity needs to authenticate validity of the first routing relationship included in the fourth information, and S305 is performed. The identification information of the fourth functional entity may be a host ID of the fourth functional entity, and the host ID of the fourth functional entity may be represented by a common network entity identity such as an FQDN or a domain name of the fourth functional entity.

In some embodiments, if the fourth information does not include the identification information of the second functional entity, the fourth functional entity considers that the first user identification information in the received fourth information is an aggregated route, and therefore does not perform authentication.

S305: The fourth functional entity sends fifth information to a fifth functional entity, where the fifth information indicates to request determination of validity of the first routing relationship.

In this embodiment, the fourth functional entity may request the fifth functional entity to determine validity of the first routing relationship included in the fourth information, where the fifth information may carry the first routing relationship included in the fourth information.

For example, the fifth functional entity may be understood as an ID routing authentication service that is located in a same ID routing domain as the fourth functional entity.

In a possible implementation, after receiving the fifth information, the fifth functional entity may match the first routing relationship with a local cache of the fifth functional entity, to determine validity of the first routing relationship.

In this embodiment, for a manner in which the fifth functional entity determines validity of the first routing relationship, refer to the manner in which the third functional entity determines validity of the first routing relationship in S302. Details are not described herein again.

S306: The fourth functional entity receives sixth information from the fifth functional entity, where the sixth information indicates validity of the first routing relationship.

In this embodiment, after determining validity of the first routing relationship, the fifth functional entity may send the sixth information to the third functional entity, to indicate validity of the first routing relationship.

In this embodiment, for related descriptions of the sixth information, refer to related descriptions of the third information in S303. For related descriptions after the fourth functional entity receives the sixth information, refer to related descriptions after the first functional entity receives the third information in S303 and S304. Details are not described herein again. When forwarding the information, the fourth functional entity needs to carry the identification information of the fourth functional entity.

In some embodiments, when forwarding the information, the fourth functional entity may further carry the identification information of the first functional entity.

In this embodiment, the fourth functional entity may determine validity of the received first routing relationship, thereby improving accuracy of the first routing relationship during transmission across ID routing domains or across ID routing networks, and improving communication efficiency. In addition, in a future 6G network in which autonomous ID routing is implemented, when a functional entity in the autonomous ID routing network performs ID routing discovery and learning in an autonomous domain and between autonomous domains, this solution may be used to determine validity of ID routing relationship information, thereby avoiding tampering with the ID routing relationship information by a man-in-the-middle.

In some possible implementations, the first functional entity and the fourth functional entity may directly obtain, from the ID resource management center, the certificate issued by the certificate issuance center and the signed second routing relationship, decrypt the signed second routing relationship according to the certificate management and signing rule, save the decrypted second routing relationship, and establish the local cache of the second routing relationship, to independently determine validity of the first routing relationship.

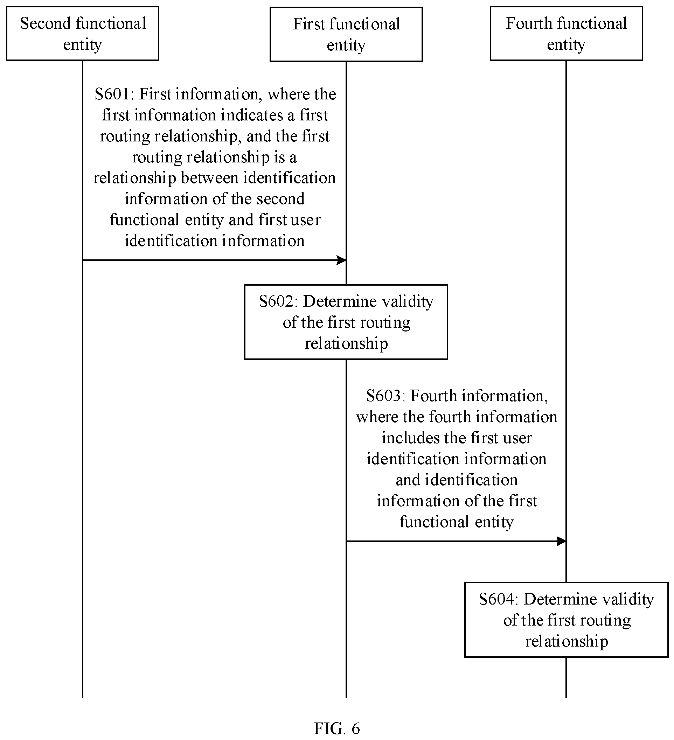

FIG. 6 is a diagram illustrating a communication method according to another embodiment of this application. As shown in FIG. 6, the method may include S601, S602, S603, S604, and S605.

S601: A first functional entity receives first information from a second functional entity, where the first information indicates a first routing relationship, and the first routing relationship is a relationship between identification information of the second functional entity and first user identification information.

In this embodiment, for a specific implementation of S601, refer to S301. Details are not described herein again.

S602: The first functional entity determines validity of the first routing relationship.

In this embodiment, the first functional entity may periodically obtain, from an ID resource management center, a certificate issued by a certificate issuance center and a signed second routing relationship, and determine validity of a trusted domain certificate by using a root certificate; if the trusted domain certificate is valid, determine validity of a certificate of the second functional entity by using the trusted domain certificate; and if the certificate of the second functional entity is valid, decrypt the signed second routing relationship by using the certificate of the second functional entity, to determine cached data of the second routing relationship, and facilitate subsequent query and authentication.

In some embodiments, the root certificate may be preconfigured in the first functional entity.

In this embodiment, for a specific implementation of S602, refer to S302 and S303. Details are not described herein again. For example, for a manner in which the first functional entity determines, based on the cached data of the second routing relationship, that the first routing relationship is valid, refer to the manner in which the third functional entity determines that the first routing relationship is valid in S302. For a related operation after the first functional entity determines validity of the first routing relationship, refer to related descriptions in S303.

S603: The first functional entity sends fourth information to a fourth functional entity, where the fourth information includes the first user identification information and identification information of the first functional entity.

In this embodiment, for a specific implementation of S603, refer to S304. Details are not described herein again.

S604: The fourth functional entity determines validity of the first routing relationship.

In this embodiment, the fourth functional entity may periodically obtain, from the ID resource management center, the certificate issued by the certificate issuance center and the signed second routing relationship, and determine validity of the trusted domain certificate by using the root certificate; if the trusted domain certificate is valid, determine validity of the certificate of the second functional entity by using the trusted domain certificate; and if the certificate of the second functional entity is valid, decrypt the signed second routing relationship by using the certificate of the second functional entity, to determine the cached data of the second routing relationship, and facilitate subsequent query and authentication.

In some embodiments, the root certificate may be preconfigured in the fourth functional entity.

In this embodiment, for a specific implementation of S604, refer to S302, S303, S305, and S306. Details are not described herein again. For example, a manner in which the fourth functional entity determines, based on the cached data of the second routing relationship, that the first routing relationship is valid is the same as a manner in which the third functional entity or the fifth functional entity determines that the first routing relationship is valid. For a related operation after the fourth functional entity determines validity of the first routing relationship, refer to related descriptions in S306.

This embodiment provides a communication method in which the first functional entity and the fourth functional entity autonomously determine validity of the first routing relationship, so that the first functional entity and the fourth functional entity do not need to request another functional entity to assist in determining validity of the first routing relationship, thereby reducing a signaling loss.

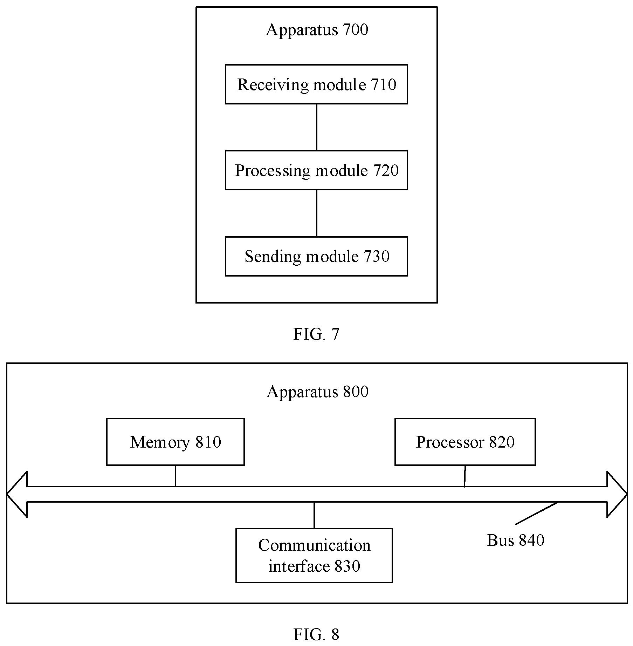

FIG. 7 is a diagram illustrating a structure of a communication apparatus according to an embodiment of this application. As shown in FIG. 7, the communication apparatus 700 may include a receiving module 710, a processing module 720, and a sending module 730.

In a possible implementation, the apparatus 700 may be configured to implement the steps/operations performed by the first functional entity in the method shown in FIG. 3, FIG. 5, or FIG. 6.

For example, when the apparatus 700 is configured to implement the method implemented by the first functional entity in FIG. 3, the receiving module 710 may be configured to implement the operations performed by the first functional entity in S301 and S303, and the sending module 730 may be configured to implement the operation performed by the first functional entity in S302.

When the apparatus 700 is configured to implement the method implemented by the first functional entity in FIG. 5, the receiving module 710 may be configured to implement the operations performed by the first functional entity in S301 and S303, and the sending module 730 may be configured to implement the operations performed by the first functional entity in S302 and S304.

When the apparatus 700 is configured to implement the method implemented by the first functional entity in FIG. 6, the receiving module 710 may be configured to implement the operation performed by the first functional entity in S601; the sending module 730 may be configured to implement the operation performed by the first functional entity in S603; and the processing module 720 may be configured to implement S602.

In a possible implementation, the apparatus 700 may be configured to implement the steps/operations performed by the second functional entity in the method shown in FIG. 3, FIG. 5, or FIG. 6.

For example, when the apparatus 700 is configured to implement the method implemented by the second functional entity in FIG. 3, the sending module 730 may be configured to implement the operation performed by the second functional entity in S301.

When the apparatus 700 is configured to implement the method implemented by the second functional entity in FIG. 5, the sending module 730 may be configured to implement the operation performed by the second functional entity in S301.

When the apparatus 700 is configured to implement the method implemented by the second functional entity in FIG. 6, the sending module 730 may be configured to implement the operation performed by the second functional entity in S601.

In a possible implementation, the apparatus 700 may be configured to implement the steps/operations performed by the third functional entity in the method shown in FIG. 3 or FIG. 5.

For example, when the apparatus 700 is configured to implement the method implemented by the third functional entity in FIG. 3, the receiving module 710 may be configured to implement the operation performed by the third functional entity in S302, and the sending module 730 may be configured to implement the operation performed by the third functional entity in S303.

When the apparatus 700 is configured to implement the method implemented by the third functional entity in FIG. 5, the receiving module 710 may be configured to implement the operation performed by the third functional entity in S302, and the sending module 730 may be configured to implement the operation performed by the third functional entity in S303.

In a possible implementation, the apparatus 700 may be configured to implement the steps/operations performed by the fourth functional entity in the method shown in FIG. 5 or FIG. 6.

For example, when the apparatus 700 is configured to implement the method implemented by the fourth functional entity in FIG. 5, the receiving module 710 may be configured to implement the operations performed by the fourth functional entity in S304 and S306, and the sending module 730 may be configured to implement the operation performed by the fourth functional entity in S305.

When the apparatus 700 is configured to implement the method implemented by the fourth functional entity in FIG. 6, the receiving module 710 may be configured to implement the operation performed by the fourth functional entity in S603, and the processing module 720 may be configured to implement S604.

In a possible implementation, the apparatus 700 may be configured to implement the steps/operations performed by the fifth functional entity in the method shown in FIG. 5.

For example, when the apparatus 700 is configured to implement the method implemented by the fifth functional entity in FIG. 5, the receiving module 710 may be configured to implement the operation performed by the fifth functional entity in S305, and the sending module 730 may be configured to implement the operation performed by the fifth functional entity in S306.

FIG. 8 is a diagram illustrating a structure of a communication apparatus according to another embodiment of this application. The apparatus 800 shown in FIG. 8 may be configured to implement the method performed by the first functional entity, the second functional entity, the third functional entity, the fourth functional entity, or the fifth functional entity in any one of the foregoing embodiments.

As shown in FIG. 8, the apparatus 800 in this embodiment includes a memory 810, a processor 820, a communication interface 830, and a bus 840. Communication connections are implemented between the memory 810, the processor 820, and the communication interface 830 by using the bus 840.

The memory 810 may be a read-only memory (read-only memory, ROM), a static storage device, a dynamic storage device, or a random access memory (random access memory, RAM). The memory 810 may store a program. When the program stored in the memory 810 is executed by the processor 820, the processor 820 is configured to perform the steps/operations performed by the first functional entity, the second functional entity, the third functional entity, the fourth functional entity, or the fifth functional entity in any one of the foregoing embodiments.

The processor 820 may be a general-purpose central processing unit (central processing unit, CPU), a microprocessor, an application-specific integrated circuit (application-specific integrated circuit, ASIC), or one or more integrated circuits, and is configured to execute a related program, to implement the communication method in method embodiments of this application.

The processor 820 may alternatively be an integrated circuit chip and has a signal processing capability. In an implementation process, the steps of the communication method shown in any one of method embodiments of this application may be completed by using a hardware integrated logic circuit in the processor 820 or by using instructions in a form of software.

The processor 820 may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 810. The processor 820 reads information in the memory 810, and completes, in combination with hardware of the processor 820, functions that need to be performed by units included in the communication apparatus in this application. For example, the steps/functions performed by the first functional entity, the second functional entity, the third functional entity, the fourth functional entity, or the fifth functional entity in FIG. 3, FIG. 5, or FIG. 6 may be performed.

Optionally, the memory 810 and the processor 820 may be integrated together.

The communication interface 830 may use, but is not limited to, a transceiver apparatus of a transceiver type, to implement communication between the apparatus 800 and another device or apparatus.

The bus 840 may include a path for transmitting information between various components (for example, the memory 810, the processor 820, and the communication interface 830) of the apparatus 800.

Some embodiments of this application further provide a computer program product. When the computer program product runs on a processor, the method shown in the foregoing embodiments may be implemented. Some embodiments of this application further provide a computer-readable storage medium. The computer-readable storage medium includes computer instructions. When the computer instructions are run on a processor, the method shown in the foregoing embodiments may be implemented.

It should be noted that the modules or components shown in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form in which a processing element invokes program code, the processing element may be a general-purpose processor, for example, a central processing unit (central processing unit, CPU) or another processor that can invoke the program code, for example, a controller. For another example, the modules may be integrated and implemented in a form of a system-on-a-chip (system-on-a-chip, SOC).

All or some of the foregoing embodiments may be implemented by software, hardware, firmware, software modules, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The term "a plurality of" in this specification means two or more. The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects, and the character "/" in a formula indicates a "division" relationship between associated objects. In addition, it should be understood that, in descriptions of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, but should not be construed as any limitation on the implementation processes of embodiments of this application.

## Claims

1. A communication method, wherein the method is performed by a first functional entity, and the method comprises:
receiving first information from a second functional entity, wherein the first information indicates a first routing relationship, and the first routing relationship is a relationship between identification information of the second functional entity and first user identification information; and
determining validity of the first routing relationship.

2. The method according to claim 1, wherein determining validity of the first routing relationship comprises:
sending second information to a third functional entity, wherein the second information is for requesting determination of validity of the first routing relationship; and
receiving third information from the third functional entity, wherein the third information indicates validity of the first routing relationship.

3. The method according to claim 2, wherein when the first routing relationship is valid, the third information further comprises a routing validity domain of the first routing relationship.

4. The method according to claim 1, wherein determining validity of the first routing relationship comprises:
obtaining fourth information, wherein the fourth information comprises information obtained by signing a second routing relationship using a key of a first certificate, the first certificate is a certificate of the second functional entity, and the second routing relationship is a relationship between the identification information of the second functional entity and user identification information belonging to the second functional entity; and
determining validity of the first routing relationship based on the fourth information.

5. The method according to claim 4, wherein the fourth information further comprises the first certificate, and determining validity of the first routing relationship based on the fourth information comprises:
determining validity of the first certificate; and
when the first certificate is valid, determining validity of the first routing relationship based on the first certificate.

6. The method according to claim 5, wherein the fourth information further comprises a second certificate, and the second certificate is a certificate of a routing domain to which the second functional entity belongs; and
determining validity of the first certificate comprises:
determining validity of the second certificate; and
when the second certificate is valid, determining validity of the first certificate based on the second certificate.

7. The method according to claim 6, wherein determining validity of the second certificate comprises:
determining validity of the second certificate based on a root certificate, wherein the second certificate is signed using the root certificate.

8. The method according to any one of claims 4 to 7, wherein the second routing relationship further comprises a routing validity domain of the second routing relationship.

9. The method according to any one of claims 2 to 8, wherein when the first routing relationship is valid, the method further comprises:
sending fifth information to a fourth functional entity, wherein the fifth information comprises the first user identification information and identification information of the first functional entity.

10. The method according to claim 9, wherein sending the fifth information to the fourth functional entity comprises:
when a routing validity domain of the first routing relationship is larger than a service domain of the first functional entity, sending the fifth information to the fourth functional entity.

11. The method according to claim 9 or 10, wherein the fifth information further comprises the identification information of the second functional entity and/or a routing validity domain of the first routing relationship.

12. A communication method, wherein the method is performed by a second functional entity, and the method comprises:
determining first information, wherein the first information indicates a first routing relationship, and the first routing relationship is a relationship between identification information of the second functional entity and first user identification information; and
sending the first information to a first functional entity.

13. A communication method, wherein the method is performed by a third functional entity, and the method comprises:
receiving second information from a first functional entity, wherein the second information is for requesting determination of validity of a first routing relationship, and the first routing relationship is a relationship between identification information of a second functional entity and first user identification information; and
sending third information to the first functional entity, wherein the third information indicates validity of the first routing relationship.

14. The method according to claim 13, wherein when the first routing relationship is valid, the third information further comprises a routing validity domain of the first routing relationship.

15. The method according to claim 13 or 14, wherein the method further comprises:
determining validity of the first routing relationship.

16. The method according to claim 15, wherein determining validity of the first routing relationship comprises:
obtaining sixth information, wherein the sixth information comprises information obtained by signing a second routing relationship using a key of a first certificate, the first certificate is a certificate of the second functional entity, and the second routing relationship is a relationship between the identification information of the second functional entity and user identification information belonging to the second functional entity; and
determining validity of the first routing relationship based on the sixth information.

17. The method according to claim 16, wherein the sixth information further comprises the first certificate, and determining validity of the first routing relationship based on the sixth information comprises:
determining validity of the first certificate; and
when the first certificate is valid, determining validity of the first routing relationship based on the first certificate.

18. The method according to claim 17, wherein the sixth information further comprises a second certificate, and the second certificate is a certificate of a routing domain to which the second functional entity belongs; and
determining validity of the first certificate comprises:
determining validity of the second certificate; and
when the second certificate is valid, determining validity of the first certificate based on the second certificate.

19. The method according to claim 18, wherein determining validity of the second certificate comprises:
determining validity of the second certificate based on a root certificate, wherein the second certificate is signed using the root certificate.

20. The method according to any one of claims 16 to 19, wherein the second routing relationship further comprises a routing validity domain of the second routing relationship.

21. A communication method, wherein the method is performed by a fourth functional entity, and the method comprises:
receiving fifth information from a first functional entity, wherein the fifth information indicates a first routing relationship, and the first routing relationship is a relationship between identification information of a second functional entity and first user identification information; and
determining validity of the first routing relationship.

22. The method according to claim 21, wherein the fifth information further comprises a routing validity domain of the first routing relationship.

23. The method according to claim 21 or 22, wherein determining validity of the first routing relationship comprises:
sending seventh information to a fifth functional entity, wherein the seventh information is for requesting determination of validity of the first routing relationship; and
receiving eighth information from the fifth functional entity, wherein the eighth information indicates validity of the first routing relationship.

24. The method according to claim 23, wherein when the first routing relationship is valid, the eighth information further comprises a routing validity domain of the first routing relationship.

25. The method according to claim 21 or 22, wherein determining validity of the first routing relationship comprises:
obtaining ninth information, wherein the ninth information comprises information obtained by signing a second routing relationship using a key of a first certificate, the first certificate is a certificate of the second functional entity, and the second routing relationship is a relationship between the identification information of the second functional entity and user identification information belonging to the second functional entity; and
determining validity of the first routing relationship based on the ninth information.

26. The method according to claim 25, wherein the ninth information further comprises the first certificate, and determining validity of the first routing relationship based on the ninth information comprises:
determining validity of the first certificate; and
when the first certificate is valid, determining validity of the first routing relationship based on the first certificate.

27. The method according to claim 26, wherein the ninth information further comprises a second certificate, and the second certificate is a certificate of a routing domain to which the second functional entity belongs; and
determining validity of the first certificate comprises:
determining validity of the second certificate; and
when the second certificate is valid, determining validity of the first certificate based on the second certificate.

28. The method according to claim 27, wherein determining validity of the second certificate comprises:
determining validity of the second certificate based on a root certificate, wherein the second certificate is signed using the root certificate.

29. The method according to any one of claims 25 to 28, wherein the second routing relationship further comprises a routing validity domain of the second routing relationship.

30. A communication method, wherein the method is performed by a fifth functional entity, and the method comprises:
receiving seventh information from a fourth functional entity, wherein the seventh information is for requesting determination of validity of a first routing relationship, and the first routing relationship is a relationship between identification information of a second functional entity and first user identification information; and
sending eighth information to the fourth functional entity, wherein the eighth information indicates validity of the first routing relationship.

31. The method according to claim 30, wherein when the first routing relationship is valid, the eighth information further comprises a routing validity domain of the first routing relationship.

32. The method according to claim 30 or 31, wherein the method further comprises:
determining validity of the first routing relationship.

33. The method according to claim 32, wherein determining validity of the first routing relationship comprises:
obtaining tenth information, wherein the tenth information comprises information obtained by signing a second routing relationship using a key of a first certificate, the first certificate is a certificate of the second functional entity, and the second routing relationship is a relationship between the identification information of the second functional entity and user identification information belonging to the second functional entity; and
determining validity of the first routing relationship based on the tenth information.

34. The method according to claim 33, wherein the tenth information further comprises the first certificate, and determining validity of the first routing relationship based on the tenth information comprises:
determining validity of the first certificate; and
when the first certificate is valid, determining validity of the first routing relationship based on the first certificate.

35. The method according to claim 34, wherein the tenth information further comprises a second certificate, and the second certificate is a certificate of a routing domain to which the second functional entity belongs; and
determining validity of the first certificate comprises:
determining validity of the second certificate; and
when the second certificate is valid, determining validity of the first certificate based on the second certificate.

36. The method according to claim 35, wherein determining validity of the second certificate comprises:
determining validity of the second certificate based on a root certificate, wherein the second certificate is signed using the root certificate.

37. The method according to any one of claims 33 to 36, wherein the second routing relationship further comprises a routing validity domain of the second routing relationship.

38. A communication system, comprising a communication apparatus configured to perform the method according to any one of claims 1 to 11 and a communication apparatus configured to perform the method according to claim 12.

39. The system according to claim 38, wherein the system further comprises at least one of the following:
a communication apparatus configured to perform the method according to any one of claims 13 to 20;
a communication apparatus configured to perform the method according to any one of claims 21 to 29; or
a communication apparatus configured to perform the method according to any one of claims 30 to 37.

40. A communication apparatus, comprising functional modules configured to implement the method according to any one of claims 1 to 11, claim 12, any one of claims 13 to 20, any one of claims 21 to 29, or any one of claims 30 to 37.

41. A communication apparatus, comprising a processor, wherein the processor is coupled to a memory, the memory is configured to store a computer program, and when the processor invokes the computer program, the apparatus is caused to perform the method according to any one of claims 1 to 11, claim 12, any one of claims 13 to 20, any one of claims 21 to 29, or any one of claims 30 to 37.

42. A computer program product, comprising computer program code, wherein when the computer program code is executed by a computer, the computer is caused to implement the method according to any one of claims 1 to 11, claim 12, any one of claims 13 to 20, any one of claims 21 to 29, or any one of claims 30 to 37.

43. A computer-readable medium, wherein the computer-readable medium stores program code for execution by a computer, and the program code comprises instructions used to perform the method according to any one of claims 1 to 11, claim 12, any one of claims 13 to 20, any one of claims 21 to 29, or any one of claims 30 to 37.
